# EUROPÄISCHE PATENTSCHRIFT

(11) **EP 2 227 623 B1**
(45) Veröffentlichungstag und Bekanntmachung des Hinweises auf die Patenterteilung: **30.11.2011**
(21) Anmeldenummer: 08867371.0
(22) Anmeldetag: 19.12.2008
(51) Int. Cl.: F02B 33/22, F02B 41/06

(54) **VERFAHREN ZUM BETREIBEN EINER BRENNKRAFTMASCHINE SOWIE BRENNKRAFTMASCHINE**
METHOD FOR OPERATING AN INTERNAL COMBUSTION ENGINE AND AN INTERNAL COMBUSTION ENGINE
PROCÉDÉ PERMETTANT DE FAIRE FONCTIONNER UN MOTEUR À COMBUSTION INTERNE, ET MOTEUR À COMBUSTION INTERNE CORRESPONDANT

(30) Priorität: 21.12.2007 DE 102007061976; 02.06.2008 DE 102008026291; 08.08.2008 DE 102008037121
(43) Veröffentlichungstag der Anmeldung: 15.09.2010
(73) Patentinhaber: Hong Kong Meta Company Limited, Hong Kong (HK)
(72) Erfinder: KREUTER, Peter, 52072 Aachen (DE)
(74) Vertreter: Kramer - Barske - Schmidtchen
(86) Internationale Anmeldenummer: PCT/EP2008/010905
(87) Internationale Veröffentlichungsnummer: WO 2009/083182

(56) Entgegenhaltungen:
- EP-A- 0 126 465
- DE-A1- 2 423 576
- FR-A- 2 758 589

## Beschreibung

Die Erfindung betrifft ein Verfahren zum Betreiben einer Brennkraftmaschine sowie eine entsprechend einem solchen Verfahren betreibbare Brennkraftmaschine.

Aus Gründen der Ressourcenschonung und der Verminderung der Umweltbelastung liegt ein zunehmend vorrangiges Entwicklungsziel bei der Entwicklung von Brennkraftmaschinen, wie sie insbesondere in Personenkraftwagen eingesetzt werden können, in der Verminderung des Kraftstoffverbrauchs bzw. der Verbesserung des Wirkungsgrades, wobei unter Wirkungsgrad der Kraftstoffverbrauch, bezogen auf die an der Kurbelwelle abnehmbare mechanische Energie verstanden wird. ,

Eine Eigenart herkömmlicher Hubkolbenbrennkraftmaschinen liegt darin, dass der gesamte thermodynamische Prozess (Ansaugen, Verdichten, Verbrennen und Ausschieben) in einem einzigen Zylinder abläuft, was erhebliche Kompromisse bzgl. der Ausnutzbarkeit der Brennstoffenergie bedeutet. Ansätze, den gesamten thermodynamischen Prozess auf zwei Zylinder zu verteilen, sind beispielsweise aus der US-2005/0268609 A1 bekannt. Bei dieser bekannten Brennkraftmaschine wird Frischladung von einem Kompressionszylinder in einen Arbeitszylinder unter Zwischenschaltung eines konstanten Zwischenvolumens übergeschoben. Dieses Überschieben erfolgt bei hohen Druckunterschieden, wodurch der Wirkungsgrad infolge thermischer Verluste und Strömungsverlusten unbefriedigend ist.

Eine weitere Eigenart moderner Hubkolbenbrennkraftmaschinen liegt in deren Einspritztechnik, bei der Otto- oder Dieselkraftstoff direkt in den Brennraum eingespritzt wird. Bei Otto-Motoren erfordert diese Technik zwar keine hohen Einspritzdrucke, jedoch ist eine sehr präzise Steuerung von Einspritzzeitpunkt und- menge, eine im Hinblick auf optimale und möglichst schadstofffreie Verbrennung ausgelegte Brennraumgeometrie sowie eine aufwändige Abgasnachbehandlung erforderlich. Bei dieselmotorischem Betrieb sind aus Gründen der Russvermeindung sehr hohe Einspritzdrucke (über 2000 bar) und eine aufwändige Abgasnachbehandlung einschließlich Dieselpartikelfilter erforderlich.

In der DE 600 21 901 T2 ist eine Brennkraftmaschine mit Regenerator und Heißluftzündvorrichtung beschrieben. Ein Kompressionszylinder ist über einen Regenerator mit einem Antriebszylinder verbunden. In der Verbindung vom Kompressionszylinder zum Regenerator arbeitet ein Ventil. In der Verbindung vom Regenerator zum Antriebszylinder arbeitet ein weiteres Ventil. Der Regenerator ist über ein Auslassventil mit einem Auslass verbunden.

Die DE 3433619 A1 beschreibt eine Brennkraftmaschine mit einem ersten Zylinder und einem zweiten Zylinder, die über ein Überströmkammer miteinander verbunden sind. In der Verbindung vom ersten Zylinder in die Überströmkammer ist, ein Ventil angeordnet. Die Überströmkammer, deren Volumen konstant ist, ist ständig mit dem zweiten Zylinder verbunden.

Die DE 577740 beschreibt eine Druckluftbrennkraftmaschine, bei der zwischen einem Verdichterzylinder und einem Arbeitszylinder eine Überströmkammer R angeordnet ist, deren Volumen konstant ist.

Die US 1,771,335 beschreibt eine Brennkraftmaschine, die in einem 6 Takt-Zyklus arbeitet und eine Mehrzahl von Zylindern aufweist. In einem Zylinderkopf der Brennkraftmaschine sind mehrere Einlasssammelrohre ausgebildet, von denen jedes mit je zwei Zylindern, kommuniziert. Weiter sind Auslasssammelrohre, jeweils eines für jeden Zylinder, vorgesehen. Eine Verbindung zwischen den Einlass- und den Auslasssammelleitungen wird von Ventilen gesteuert. Zusätzlich ist im Zylinderkopf eine Hilfssammelleitung vorgesehen, die mit allen Zylindern kommuniziert und deren Verbindung mit den Zylindern von Ventilen gesteuert wird.

In der JP 57091324 A ist eine Brennkraftmaschine mit einem Verdichterzylinder und einem Arbeitszylinder beschrieben, die mittels einer Überströmkammer verbunden sind. Der Verdichterkolben und der Arbeitskolben befinden sich gleichzeitig im OT. Dabei befindet sich die vom Verdichterkolben komprimierte Frischladung vollständig in der Überströmkammer und ist von dem Arbeitszylinder abgetrennt. Nach Zündung der in der Überströmkammer befindlichen Frischladung öffnet ein Einlassventil in den Arbeitszylinder, so dass die verbrennende Frischladung in den Arbeitszylinder hinein expandiert.

Die US 2007/0157894 A1 beschreibt eine Brennkraftmaschine mit einem in einem Verdichterzylinder arbeitenden Verdichterkolben und einem in einem Arbeitszylinder arbeitenden Arbeitskolben. In einem Einlass des Verdichterzylinders arbeitet ein Frischladungseinlassventil. Die Verdichterkammer des Verdichterzylinders ist mit der Arbeitskammer des Arbeitszylinders über eine Überströmkammer verbunden, in deren Abzweigung von der Verdichterkammer ein als Rückschlagventil ausgebildetes Überströmventil angeordnet ist. In die Mündung der Überströmkammer in die Arbeitskammer ist ein Einlassventil angeordnet. Über ein Auslassventil ist die Arbeitskammer mit einem Auslasskanal der Brennkraftmaschine verbunden. Die Ventile und werden von Nocken betätigt, die beispielsweise an einer drehfest mit der Kurbelwelle verbundenen Nockenwelle ausgebildet sind. Die Kurbelwelle ist über Pleuel mit den Kolben verbunden. Der Arbeitskolben eilt dem Verdichterkolben um einen Phasenwinkel zwischen 10° und 40° voraus, wobei dieser Phasenwinkel derart gewählt ist, dass, wenn sich der Verdichterkolben in Richtung auf seinen OT bewegt, der Arbeitskolben sich aus seinem OT heraus bewegt und dabei eine im Wesentlichen gleiche Masse komprimierter Luft vom Arbeitskolben in die Überströmkammer hinein und aus der Überströmkammer heraus in die Arbeitskammer überführt wird. Bei weiterer Abwärtsbewegung des Arbeitskolbens, typischerweise in einem Bereich zwischen 10° und 30° nach OT, zündet die in der Arbeitskammer befindliche Ladung. Das als Rückschlagventil ausgebildete Überströmventil und das Einlassventil in die Arbeitskammer halten den Gasdruck innerhalb der Überströmkammer während des gesamten Betriebs auf einem Wert, der mindestens so hoch ist wie der Druckwert, bei dem die Ladung zündet.

In den Oberbegriffen der unabhängigen Patentansprüche wird von der DE 24 23 576 A1 ausgegangen. Diese Druckschrift beschreibt eine Kolbenbrennkraftmaschine mit Selbstzündung mit einem gesonderten, gekühlten Luftkompressor zum annähernd isothermischen Verdichten der Verbrennungsluft, getrennten Zufuhrkanälen für Brennstoff und komprimierte Luft, einem Ventil zur Steuerung der Luftzufuhr und einer Düse für die Brennstoffzufuhr zu einem Brennraum, in dem der im OT-Bereich getrennt eingespritzte Flüssig-Brennstoff und die Druckluft ohne Drucksteigerung durch Selbstzündung im Brennraum verbrennen und expandieren, und mit einem Auslassventil zum Abführen der expandierten Verbrennungsgase aus dem Brennraum. Der den Brennraum begrenzende Expansionskolben und der Kompressorkolben des Luftkompressors sind mit einer gemeinsamen Kurbelwelle verbunden. Im Zylinderkopf ist zwischen einem Druckventil des Kompressors und einem gegenläufig gesteuerten Einströmventil des Arbeits- bzw. Expansionszylinders eine Speicherkammer mit konstantem Volumen angeordnet, die die für einen Verbrennungsvorgang benötigte komprimierte Luftmenge aufnimmt.

Der Erfindung liegt die Aufgabe zugrunde, ein Verfahren zum Betreiben einer Brennkraftmaschine sowie eine Brennkraftmaschine zu schaffen, das bzw. die gegenüber herkömmlichen Brennkraftmaschinen mit verbessertem Wirkungsgrad arbeitet.

Der Anspruch 1 kennzeichnet ein Verfahren zur Lösung der Erfindungsaufgabe.

Dadurch, dass Frischluft außerhalb des heißen Arbeitszylinders in einem Verdichterzylinder verdichtet wird und die bei jedem Arbeitszyklus verdichtete, in die Überströmkammer übergeschobene Frischladung gegebenenfalls unter weiterer Verdichtung während jedes Arbeitszyklus zumindest weitgehend, bevorzugt zumindest annähernd vollständig in die Arbeitskammer ausgeschoben und zur Verbrennung genutzt wird, wird die Kompressionsarbeit bei gleichzeitig guter Füllung herabgesetzt, wodurch der Wirkungsgrad der Brennkraftmaschine gesteigert wird.

Die Unteransprüche 2 bis 14 sind auf vorteilhafte Durchführungsformen der erfindungsgemäßen Verfahren gerichtet.

Der Anspruch 15 kennzeichnet eine Brennkraftmaschine zur Lösung des diesbezüglichen Teils der Erfindungsaufgabe.

Die erfindungsgemäße Brennkraftmaschine wird mit den Merkmalen der Ansprüche 16 bis 30 in vorteilhafter Weise weitergebildet.

Mit dem erfindungsgemäßen Verfahren beziehungsweise einer erfindungsgemäßen Brennkraftmaschine können weitgehend alle gasförmigen und flüssigen Kraftstoffe verbrannt werden. Beispielsweise kann strömungsoberhalb des Verdichterzylinders oder im Verdichterzylinder der Frischluft zugesetzter gasförmiger oder flüssiger Kraftstoff bei der im Verdichterzylinder erfolgenden Verdichtung und dem anschließenden Überströmen in die Überströmkammer mit der Frischluft zu einem ausgezeichnet brennfähigen Gemisch aufbereitet werden, das hoch verdichtet aus der Überströmkammer in die Arbeitskammer ausgeschoben wird und dort vorzugsweise ohne jede Fremdzündung selbsttätig verbrennt. Auf diese Weise können Dieselkraftstoffe ohne die Notwendigkeit hoher Einspritzdrucke verarbeitet werden und können Ottokraftstoffe ohne Fremdzündung verarbeitet werden, wobei wegen der sehr guten Gemischaufbereitung zusätzlich ein schadstoffarmes Gas erzielt wird.

Die Erfindung, die für stationäre und für in Fahrzeugen, Schiffen usw. eingebaute Brennkraftmaschinen genutzt werden kann, wird im Folgenden anhand schematischer Zeichnungen beispielsweise und mit weiteren Einzelheiten erläutert.

In den Figuren stellen dar:
- Fig. 1: eine schematische Querschnittsansicht von Teilen einer erfindungsgemäßen Brennkraftmaschine mit einem Verdichterzylinder, Überströmzylinder und Arbeitszylinder;
- Fig. 2 bis 8: der Fig. 1 ähnliche Ansichten in verschiedenen Betriebszuständen;
- Fig. 9: Volumenverläufe in Abhängigkeit von der Stellung der Kurbelwelle;
- Fig. 10: Druckverläufe sowie Öffnungs- und Schließzeiten der Ventile in Abhängigkeit von der Stellung der Kurbelwelle;
- Fig. 11: eine perspektivische Ansicht eines beispielhaften Ventiltriebs;
- Fig. 12: einen Schnitt durch einen Überströmkolben mit darin angeordnetem Überströmventil;
- Fig. 13: eine perspektivische Ansicht eines invertierten Einlassventil;
- Fig. 14: eine perspektivische Ansicht eines Rollenschlepphebels zur Betätigung der Überströmkolben;,
- Fig. 15: eine Ausführungsform des Ventiltriebs mit Verwendung von Bauteilen der Fig. 13 und 14;
- Fig. 16: eine Schemazeichnung einer erfindungsgemäßen Brennkraftmaschine mit Saugrohreinspritzung;
- Fig. 17: eine schematische Aufsicht auf eine erfindungsgemäße mehrzylindrige Brennkraftmaschine; und
- Fig. 18: eine schematische perspektivische Ansicht der Kolben einer Zylindereinheit der Brennkraftmaschine gem. Fig. 13 mit Kurbelwelle.

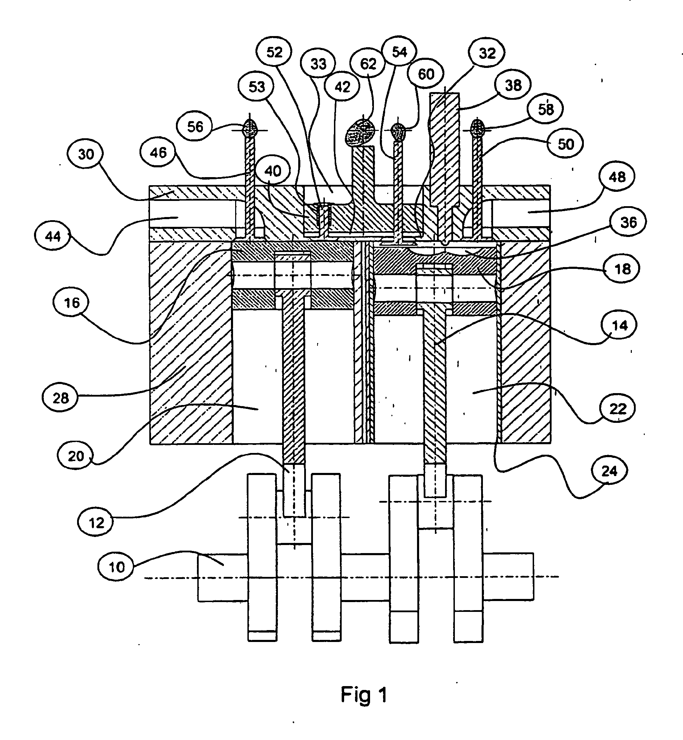

Gemäß Fig. 1 weist eine erfindungsgemäße Brennkraftmaschine eine Kurbelwelle 10 mit zwei benachbarten Kurbeln auf, die über je ein Pleuel 12 bzw. 14 mit einem Verdichterkolben 16 bzw. einem Arbeitskolben 18 verbunden sind. Der Verdichterkolben 16 ist innerhalb eines Verdichterzylinders 20 beweglich. Der Arbeitskolben ist innerhalb eines Arbeitszylinders 22 beweglich, wobei der Arbeitszylinder 22 vorzugsweise mit einem Zylinderrohr 24 ausgekleidet ist.

Nach oben hin sind die Zylinder, die bevorzugt innerhalb eines gemeinsamen Zylindergehäuses 28 ausgebildet sind, mittels eines Zylinderkopfes 30 verschlossen, der in einem die beiden Zylinder 20 und 22 überlappenden Bereich eine verhältnismäßig dünne Stirnwand 32 aufweist, die Teilbereiche der Zylinder 20 und 22 nach oben abschließt und einen im Zylinderkopf 30 ausgebildeten Überströmzylinder 33 nach unten abschließt.

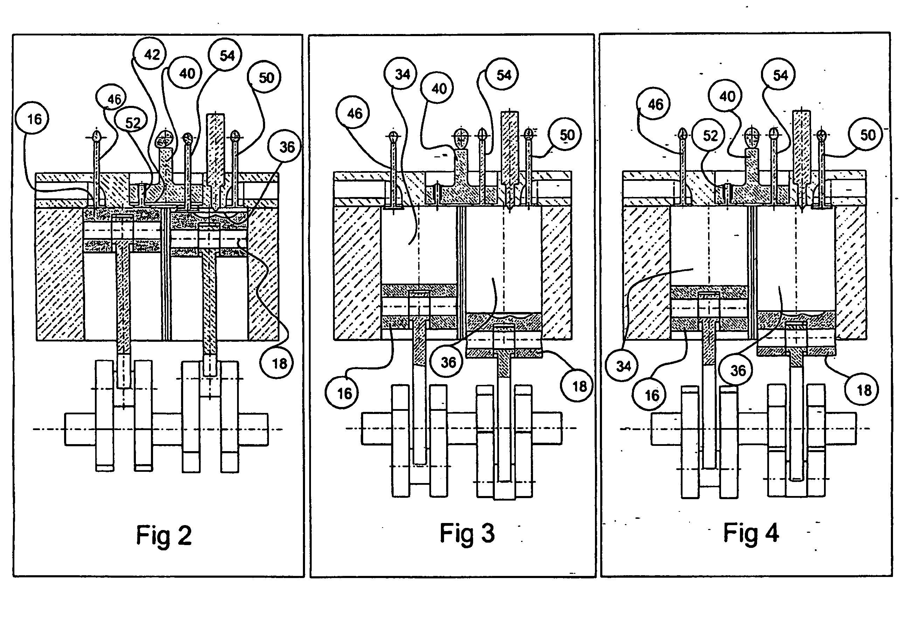

Zwischen dem Verdichterkolben 16 und dem Zylinderkopf 30 ist eine Verdichterkammer 34 ausgebildet (siehe Fig. 3). Zwischen dem Arbeitskolben 18 und dem Zylinderkopf 30 ist eine Arbeitskammer 36 ausgebildet, in die ein Einspritzventil 38 einragt.

In dem Überströmzylinder 33'ist ein Überströmkolben 40 bewegbar, der eine Überströmkammer 42 begrenzt.

In dem Zylinderkopf 30 ist ein Frischluft- bzw. Frischladungseinlasskanal 44 ausgebildet, in dem ein Frischladungseinlassventil 46 arbeitet, das die Verbindung zwischen dem Frischladungseinlasskanal 44 und der Verdichterkammer 34 steuert. Der Begriff Frischladung umfasst die Inhalte reine Frischluft und Frischluft mit zugesetztem Brennstoff und/oder Restgas.

In dem Zylinderkopf 30 ist weiter ein Auslasskanal 48 ausgebildet, in dem ein Auslassventil 50 arbeitet, das die Verbindung zwischen der Arbeitskammer 36 und dem Auslasskanal 48 steuert.

In der Stirnwand 32 ist eine die Verdichterkammer 34 mit der Überströmkammer 42 verbindende Überströmöffnung ausgebildet, in der ein Überströmventil 52 arbeitet, das bei einer Bewegung weg von der Verdichterkammer öffnet. Ein Schaft des Überströmventils 52 ist in dem Überströmkolben 40 unter Abdichtung beweglich geführt, wobei das Überströmventil 52 gegen die Kraft einer Feder 53 in den Überströmkolben 40 hinein bewegbar ist und vorzugsweise mit begrenztem Hub aus dem Überströmkolben 40 heraus bewegbar ist.

In einer weiteren Öffnung der Stirnwand 32, die die Überströmkammer 42 mit der Arbeitskammer 36 verbindet, arbeitet ein Einlassventil 54, dessen Schaft durch den Überströmkolben 40 unter Abdichtung beweglich hindurchgeführt ist.

Zur Betätigung der Ventile 46, 50 und 54 dienen ein Frischladungsnocken 56, ein Auslassnocken 58 und ein Einlassnocken 60. Der Überströmkolben 40 wird von einem Überströmnocken 62 betätigt.

Die Nocken sind in zweckentsprechender Weise an einer oder mehreren Nockenwellen ausgebildet, die vorzugsweise von der Kurbelwelle 10 mit gleicher Drehzahl wie die der Kurbelwelle angetrieben werden.

Die Funktion der hinsichtlich ihres grundsätzlichen Aufbaus beschriebenen Brennkraftmaschine wird im Folgenden anhand der Fig. 2 bis 8 erläutert, wobei der Übersichtlichkeit halber in diesen Figuren nur wenige Bezugszeichen eingefügt sind.

Fig. 2 zeigt die Brennkraftmaschine in einem Zustand, in dem der Verdichterkolben 16 seinen oberen Totpunkt erreicht hat und das Volumen der Verdichterkammer minimal (annähernd Null) ist. Der Überströmkolben 40 befindet sich kurz vor seinem oberen Totpunkt (als oberer Totpunkt des Überströmkolbens 40 ist die Stellung definiert, in der die Überströmkammer 42 minimales Volumen (annähernd Null) hat). Der Arbeitskolben 18 hat seinen oberen Totpunkt bereits verlassen. Er eilt dem Verdichterkolben 16 in dieser beispielhaften Ausführungsform um einige Grad voraus, was durch entsprechenden Versatz der zugehörigen Kurbeln der Kurbelwelle 10 erreicht wird.

Das Frischladungseinlassventil 46 ist geschlossen. Das Überströmventil 52 ist geschlossen. Das Einlassventil 54 ist offen und das Auslassventil 50 ist geschlossen.

Der Zustand der Fig. 2 entspricht etwa dem Zustand, in dem ein Ansaugen von Frischladung bzw. ein Befüllen der Verdichterkammer 34 mit Frischladung beginnt und in der Überströmkammer 42 enthaltene verdichtete Frischladung noch nicht vollständig in die Arbeitskammer 36 übergeströmt ist.

In Fig. 3 ist der Zustand dargestellt, in dem das Füllen der Verdichterkammer 34 mit Frischladung weitgehend beendet ist, wobei der Verdichterkolben 16 sich annähernd im Bereich seines unteren Totpunktes befindet, der Überströmkolben 40 sich im oberen Totpunkt - d.h. bei seinem minimalen Volumen - befindet und der Arbeitskolben 18 sich am Ende eines Arbeitshubs, der kurz nach dem Zustand der Fig. 2 begonnen hat, befindet, in dem Frischladung verbrannt ist. Das Frischladungseinlassventil 46 ist noch geöffnet, das Überströmventil 52 ist gegen die Kraft der Feder 53 weitgehend in den Überströmkolben 40 hinein bewegt, das Einlassventil 54 und das Auslassventil 50 sind geschlossen.

Fig. 4 zeigt den Zustand, in dem die Verdichtung der Frischladung und etwa gleichzeitig damit der Ausstoß der verbrannten Ladung beginnt. Der Verdichterkolben 16 bewegt sich nach Durchfahren seines unteren Totpunktes aufwärts, um die Frischladung in der Verdichterkammer 34 zu verdichten. Der Überströmkolben 40 befindet sich weiter im Bereich seines oberen Totpunktes.
Das Überströmventil 52 und das Einlassventil 54 sind geschlossen. Der Arbeitskolben 18 beginnt seine Aufwärtsbewegung. Das Auslassventil 50 ist geöffnet.

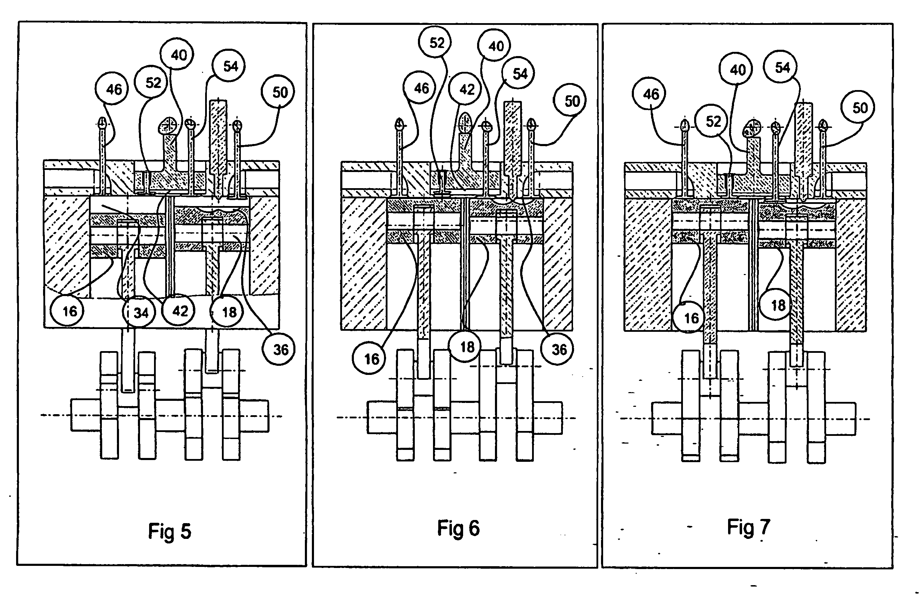

Fig. 5 zeigt den Zustand, in dem das Überströmen der verdichteten, in der Verdichterkammer 34 befindlichen Ladung in die Überströmkammer 42 beginnt:

Der Verdichterkolben 16 nähert sich bei weiterhin geschlossenem Frischladungseinlassventil 46 seinem oberen Totpunkt. Der Überströmkolben 40 bewegt sich von seinem oberen Totpunkt weg, wobei sich das Überströmventil 52 durch die Kraft der Feder 53 aus dem Überströmkolben 40 herausbewegt und durch den Druck in der Verdichterkammer 34 geöffnet wird. Dadurch kann verdichtete Frischladung in die Überströmkammer 42 einströmen, wobei das Einlassventil 54 geschlossen ist. Der Arbeitskolben 18 hat seinen oberen Totpunkt annähernd erreicht, wobei das Auslassventil 50 am Ende des Expansionshubs noch offen ist.

Fig. 6 zeigt die Brennkraftmaschine in einem Zustand etwas nach dem Zustand der Fig. 5, in dem sich der Verdichterkolben 16 bei weiterhin geschlossenem Frischladungseinlassventil 46 in seinen oberen Totpunkt bewegt und der Arbeitskolben 18 seinen oberen Totpunkt bereits erreicht hat. Das Überströmventil 52 ist bei etwa in seinem unteren Totpunkt befindlichem Überströmkolben 40 weitgehend geöffnet, wobei die Öffnung noch dadurch unterstützt werden kann, dass das Überströmventil 52 nicht um den vollen Hub des Überströmkolbens 40 aus diesem heraus bewegbar ist, so dass es durch die Bewegung des Überströmkolbens in dessen UT von seinem Sitz abgehoben wird. Die vom Verdichterkolben 16 verdichtete Frischladung strömt in die Überströmkammer 42 über.

Das Volumen der Verdichterkammer 34 ist im OT des Verdichterkolbens 16 minimal und vorteilhaft nur so groß, wie durch Toleranzen erforderlich.

Fig. 7 zeigt den Zustand der Brennkraftmaschine, bei dem der Verdichterkolben sich noch im Bereich des oberen Totpunktes befindet und der Arbeitskolben 18 seinen oberen Totpunkt bereits verlassen hat.

Das Frischladungseinlassventil 46 ist geschlossen. Der Überströmkolben 40 bewegt sich unter Verkleinerung des Volumens der Überströmkammer 42 in Richtung auf seinen oberen Totpunkt, wobei das Überströmventil 52 durch den fehlenden Druck in der Verdichterkammer 34 geschlossen ist und das Einlassventil 54 geöffnet ist, so dass die in der Überströmkammer 42 befindliche, verdichtete Frischladung in die Arbeitskammer 36 überdrückt wird, deren Volumen sich durch den sich bereits nach unten bewegenden Arbeitskolben 18 vergrößert. Das Auslassventil 50 ist geschlossen.

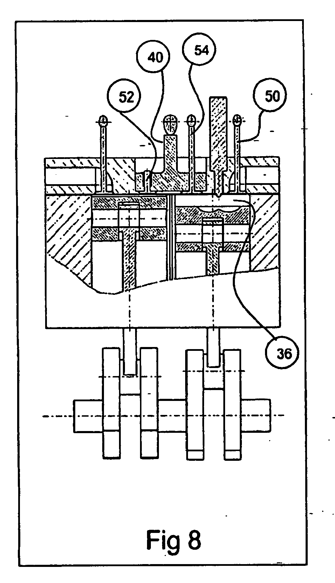

Fig. 8 zeigt den Zustand geringfügig nach dem Zustand der Fig. 7, wobei sich der überströmkolben 40 bei geschlossenem Überströmventil 52 und wieder geschlossenem Einlassventil 54 in seinem oberen Totpunkt befindet, die gesamte verdichtete Ladung sich in der Arbeitskammer 36 befindet und dort bei weiterhin geschlossenem Auslassventil 50 die Verbrennung beginnt, indem der kurz vorher eingespritzte Dieselkraftstoff sich selbst entzündet. Bei Ausbildung als Ottomotor mit Direkteinspritzung setzt kurz vor dem Zustand der Fig. 8 die Einspritzung ein und wird etwa im Zustand der Fig. 8 gezündet. Bei Ausbildung als nicht direkt einspritzender Ottomotor kann die Gemischbildung vor dem Frischladungseinlassventil 46 erfolgen, oder beispielsweise im Bereich der Überströmkammer 42.

Das Volumen der Überströmkammer 42 ist im OT des Überströmkolbens minimal und vorteilhafterweise nur so groß, wie durch Toleranzen unumgänglich. Es sollte unter 15 % des maximalen Volumens der Überströmkammer (Überströmkolben im UT), vorteilhaft unter 10 %, noch vorteilhafter unter 5 %, möglichst unter 1 % betragen.

Der Zustand der Fig. 8 ist der Zustand, den die Brennkraftmaschine kurz nach dem Zustand der Fig. 2 einnimmt, so dass der Zyklus geschlossen ist.

Bezugnehmend auf den Beginn des Überströmens der in der Überströmkammer 42 befindlichen verdichteten Frischladung in die Arbeitskammer 36 (Übergang vom Zustand gemäß Figur 6 zum Zustand gemäß Figur 7) ist es vorteilhaft, wenn die Steuerzeiten des Einlassventils 54 und des Auslassventils 50 derart gewählt sind, dass eine Verbindung der Überströmkammer 42 mit der Arbeitskammer 36 bei nur geringen Druckunterschieden von kleiner als 15 bar, bevorzugt kleiner als 10 bar oder noch vorteilhafter kleiner 5 bar zwischen den Kammern beginnt bzw. vorhanden ist. Diese Werte sind nur beispielhaft und nicht einschränkend. Besonders vorteilhaft erfolgt die Verbindung der Überströmkammer 42 mit der Arbeitskammer 36 zumindest bei näherungsweise Druckgleichgewicht in beiden Kammern. Das Auslassventil 50 wird vor dem OT des Arbeitskolbens 18 geschlossen, so dass in der Arbeitskammer 36 eine gewisse Restgasmenge verbleibt. Das Einlassventil 54 ist vorteilhafterweise bei Schließen des Auslassventils 50 noch geschlossen und öffnet beim Erreichen der oben genannten kleinen Druckunterschiede zwischen Arbeitskammer 36 und Überströmkammer 42 oder bei nahezu erreichter Druckgleichheit, so dass die Frischladung in energetisch bzw. thermodynamisch vorteilhafter Weise aus der sich verkleinernden Überströmkammer 42 in die Arbeitskammer 36 übergeschoben wird.

Wie aus dem Vorstehenden ersichtlich, erfolgt in dem Verdichterzylinder 20 die Befüllung mit frischer, insbesondere im Volllastbereich vorzugsweise kalter Ladung und deren Verdichtung. Die verdichtete Ladung wird unter Volumenzunahme der Überströmkammer 42 in die Überströmkammer verdrängt, von wo aus die verdichtete Ladung unter Volumenabnahme der Überströmkammer in die Arbeitskammer übergeschoben wird, in der sie zur Leistung mechanischer Arbeit verbrannt wird. Das Überschieben der in der Verdichterkammer 34 verdichteten Luft in die Überströmkammer 42 und von dort in die Arbeitskammer 36 geschieht energetisch günstig bei kleinen Druckunterschieden zwischen den jeweiligen Kammern.

Aus thermodynamischen Gründen ist für einen möglichst guten Wirkungsgrad die Verdichterkammer 34 möglichst kühl und ist die Arbeitskammer 36 heiß. Der Verdichterzylinder 20 ist somit vorteilhafterweise vom Arbeitszylinder 22 thermisch möglichst isoliert und wird möglichst stark gekühlt, wohingegen der Arbeitszylinder nur dem jeweiligen Zweck entsprechend soweit gekühlt wird, dass die Materialien thermisch nicht überbeansprucht werden. Dies wird durch entsprechenden Verlauf nicht dargestellter Kühlkanäle bzw. die Aufteilung des Kühlsystems in ein Kühlsystem zum Kühlen des Arbeitszylinders und ein Kühlsystem zum Kühlen des Verdichterzylinders erreicht sowie dadurch, dass der Verdichterzylinder und/oder der Arbeitszylinder mit thermisch entkoppelnden Auskleidungen versehen werden. Der an die heiße Arbeitkammer 36 angrenzende Arbeitskolben 18 ist für eine thermische Isolierung vorteilhafterweise in Sandwichbauweise ausgeführt oder mit einer thermisch isolierenden Beschichtung, beispielsweise aus Keramik, versehen.

Infolge des erzwungenen Ladungswechsels durch das Überschieben der verdichteten Frischladung in die Arbeitskammer ist nur eine geringe Kühlung des Arbeitszylinders erforderlich. Durch die Integration des Überströmventils 52 in den Überströmkolben 40 wird Bäuraum gespart und dennoch ein Überströmventil mit großem Durchströmquerschnitt ermöglicht.

Der Überströmkolben 40 ist zur thermischen Isolierung vorteilhafterweise an seiner zur Stirnwand 32 weisenden Seite beispielsweise mittels einer gesonderten Isolationsschicht thermisch isoliert. Auch der Expansionszylinder ist vorteilhafterweise beispielsweise mittels eines eingesetzten Rohres thermisch isoliert. Besonders vorteilhaft ist eine thermisch isolierende Ausbildung der Oberseite des Arbeitskolbens 18 und des der Oberseite des Arbeitskolbens zugewandten Bereiches der Unterseite des Zylinderkopfes 30 einschließlich zumindest des entsprechenden Bereiches der Stirnwand 32.

Bei dem vorstehend beschriebenen Ausführungsbeispiel der Erfindung eilt der Arbeitskolben 18 dem Verdichterkolben 16 voraus, d.h. der Arbeitskolben 18 erreicht seinen oberen Totpunkt bevor der Verdichterkolben 16 seinen oberen Totpunkt erreicht. Dies führt dazu, dass die unter hohem Druck von der Überströmkammer in die Arbeitskammer ausgeschobene Frischladung vom Arbeitskolben nicht weiter verdichtet wird. Zum Erreichen hoher Kompressionsendtemperaturen und hoher Verdichtungen ist es vorteilhaft, wenn der Arbeitskolben dem Verdichterkolben etwas nacheilt, so dass die aus der Überströmkammer in die Arbeitskammer ausgeschobene Frischladung vom Arbeitskolben weiter verdichtet wird, wobei sie zusätzlich durch die aufgenommene Wandwärme der Arbeitskammer komprimiert wird. Dies vermindert zusätzlich den Kühlbedarf des Arbeitszylinders.

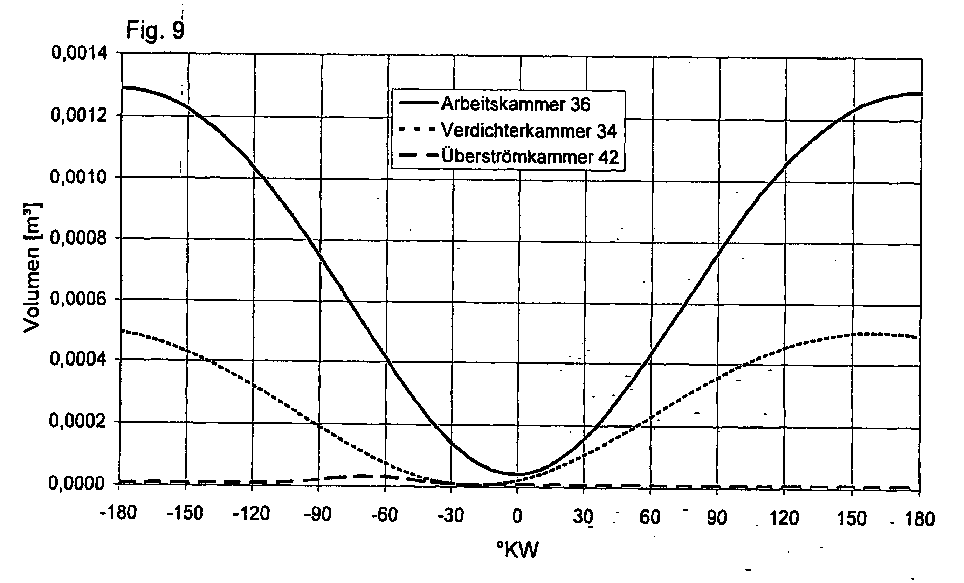

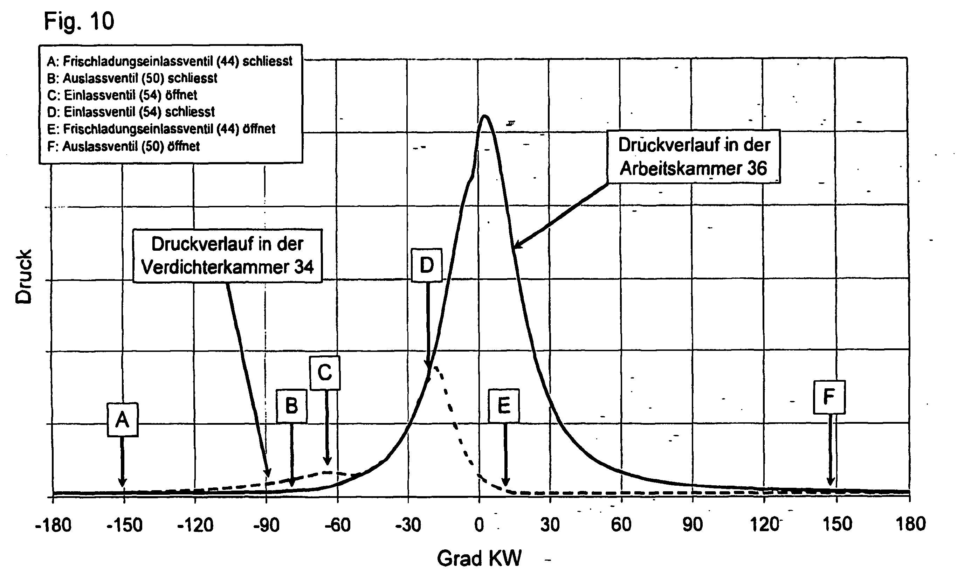

Ein entsprechendes Ausführungsbeispiel der erfindungsgemäßen Brennkraftmaschine wird im Folgenden anhand der Figuren 9 und 10 erläutert. Fig. 9 zeigt die Volumina der Arbeitskammer 36, Verdichterkammer 34 und Überströmkammer 42 jeweils in Abhängigkeit von der Stellung der Kurbelwelle, wobei der obere Totpunkt des Arbeitskolbens (minimales Volumen der Arbeitskammer 36) mit 0° bezeichnet ist. Fig. 10 gibt die Druckverläufe in der Arbeitskammer und der Verdichterkammer und zusätzlich beispielhafte Öffnungs- und Schließzeitpunkte der jeweiligen Ventile in Abhängigkeit von der Stellung der Kurbelwelle an.

Wie ersichtlich, schließt bei etwa -150° Kurbelwinkel, d.h. etwas nach UT des Verdichterkolbens, das Frischladungseinlassventil 44. Der Druck in der Verdichterkammer (gestrichelte Kurve) nimmt dann mit abnehmenden Volumen der Verdichterkammer 34 zu. Bei etwa -100° KW beginnt der Überströmkolben sich aus seinem OT heraus zu bewegen, so dass das Volumen der Überströmkammer 42 zunimmt. Bei etwa -95° öffnet das Überströmventil 52, so dass verdichtete Frischladung unter weiterer Verminderung des Volumens der Verdichterkammer 34 und Zunahme des Volumens der Überströmkammer 42 in die Überströmkammer 42 übergeschoben wird. Bei etwa,-75° schließt das Auslassventil 50, wodurch das Ausstoßen verbrannter Ladung aus der Arbeitskammer 36 beendet wird. Bei etwa -65°, d.h. bei etwa maximalem Volumen der Überströmkammer 42 öffnet das Einlassventil 54, so dass verdichtete Luft aus der Überströmkammer in die Arbeitskammer ausgeschoben wird, wobei der Druck in der Überströmkammer bevorzugt annähernd gleich dem der Arbeitskammer ist oder Druckunterschiede von kleiner 15 bar, vorteilhafter kleiner 10 bar oder noch besser kleiner 5bar herrschen. Das Überschieben und Ausschieben der verdichteten Frischladung hält an, bis die Verdichterkammer und die Überströmkammer ihr geringstes Volumen haben, wobei die Drucke bis etwa -20° zunehmen, bei welchem Wert der Verdichterkolben und der Überströmkolben in den OT gelangen und das Überströmventil 52 und das Einlassventil 54 schließen.

Die sich in der Arbeitskammer befindende verdichtete Ladung zündet, woraus sich der in Fig. 10 dargestellte Druckverlauf in der Arbeitskammer 36 ergibt. Bei etwa 10° KW wird das Frischladungseinlassventil 44 geöffnet, so dass die Füllung der Verdichterkammer 34 wieder beginnt. Bei etwa 140° KW öffnet das Auslassventil 50 für den Auslass der verbrannten Ladung.

Mit der geschilderten Prozessführung ist es aufgrund der kontinuierlich hohen Wandtemperaturen in der Arbeitskammer 36 sowie aufgrund der Einspritzung in heißes Restgas möglich, auch Ottokraftstoff ohne Hilfe einer Zündkerze unter Direkteinspritzung in die Arbeitskammer, ähnlich wie Dieselkraftstoff unter Selbstzündung zu verbrennen, so dass nach dem erfindungsgemäßen Verfahren sowohl Ottokraftstoffe als auch Dieselkraftstoffe verwendet werden können.

Wie sich aus dem Vorstehenden ergibt, kann das Überströmen der im Verdichterzylinder 22 verdichteten Frischladung in die Überströmkammer 42 und von dort das Überschieben in die Arbeitskammer in unterschiedlichster Weise gesteuert werden. Unter Strömungsgesichtspunkten ist energetisch günstig, wenn die in der Verdichterkammer 34 verdichtete Frischladung bereits während ihrer Verdichtung in die sich zunächst vergrößernde Überströmkammer überströmt und von dort bei zumindest annähernder Druckgleichheit zwischen Überströmkammer und Arbeitskammer in die Arbeitskammer ausgeschoben, wird, wobei die annähernde Druckgleichheit zwischen Überströmkammer und Arbeitskammer während des Ausschiebens aufrechterhalten werden kann. Dabei können sich das Überschieben und Ausschieben überlappen. Dadurch, dass das Volumen der Verdichterkammer bei Beendigung des Überschiebens etwa Null ist und das Volumen der Überströmkammer bei Beendigung des Ausschiebens etwa Null ist, ist gewährleistet, dass die gesamte, außerhalb der Arbeitskammer verdichtetet Frischladung in die Arbeitskammer gelangt. Für die Verbrennungsbedingungen in der Arbeitskammer kann es günstig sein, dass das Überschieben erst nach Beendigung des Überströmens erfolgt, wobei sich der Druck in der Überströmkammer durch Erwärmung der dort kurzzeitig gespeicherten Frischladung mittels Abgasenergie erhöht und das Ausschieben dann innerhalb eines verhältnismäßig kurzen Zeitraums erfolgt.

Wie sich aus dem Vorstehenden weiter ergibt, ist die Verdichtung der Frischladung durch das Verhältnis des maximalen Volumens der Verdichterkammer zum Kompressionsvolumen, d.h. dem minimalen Volumen der Arbeitskammer 36 gegeben. Die Expansion ist durch das Verhältnis des Volumens der Arbeitskammer 36 bei Öffnung des Auslassventils 50 zum Kompressionsvolumen gegeben und kann somit größer sein als die Verdichtung. Die erfindungsgemäße Brennkraftmaschine kann somit mit verlängerter Expansion arbeiten, d.h. einer Expansion, die größer ist als die Verdichtung, was thermodynamisch vorteilhaft ist.

Die effektive Verdichtung der Frischladung, d.h. das Verhältnis des je Ansaughub angesaugtem Frischladungsvolumens zum minimalen Volumen der Arbeitskammer kann durch die Steuerzeit des Frischladungseinlassventils 46 verändert werden. Je nach Einsatzgebiet und Lastkollektiv des Motors kann es zweckmäßig sein, nur im Teillastbereich mit verlängerter Expansion, d.h. größerer Expansion als Verdichtung zu Arbeiten. Dies kann durch Veränderung der Steuerzeiten beispielsweise des Frischladungseinlassventils 46 erreicht werden, indem das Frischladungseinlassventil bei abnehmender Last der Brennkraftmaschine zunehmend vor dem OT des Verdichterkolbens oder nach dem OT des Verdichterkolbens geschlossen wird, so dass sich das effektiv angesaugte und dann verdichtete Frischladungsvolumen vermindert. In einem solchen Fall kann es zweckmäßig sein, den Verdichterkolben 16 und Verdichterzylinder 20 mit gleichen geometrischen Abmessungen auszuführen wie den Arbeitskolben 18 und den Arbeitszylinder 22, d.h. mit gleicher Bohrung und Hub. Es versteht sich, dass das Volumen der Verdichterkammer im OT des Verdichterkolbens auch bei einer solchen Ausführung vorteilhafterweise annähernd 0 ist, damit die gesamte verdichtete Frischladung in die Überströmkammer übergeschoben wird.

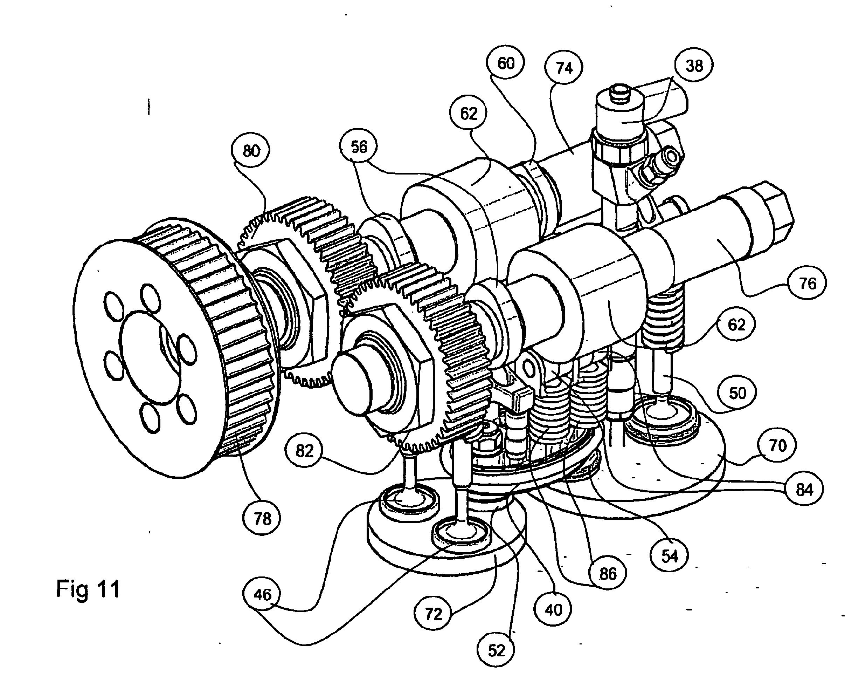

Fig. 11 zeigt schematisch beispielhaft einen erfindungsgemäßen Nockentrieb. Der die Arbeitskammer 36 nach oben abschließende Teil der Stirnwand des Zylinders ist mit, 70 bezeichnet. Der die Verdichterkammer 34 nach oben abschließende Teil der Stirnwand des Zylinders ist mit 72 bezeichnet. Die Ventile und Nocken sind mit den gleichen Bezugszeichen wie in den bisherigen Figuren bezeichnet.

Der Ventiltrieb weist zwei Nockenwellen 74 und 76 auf, von denen eine ein Rad 78 trägt, das über eine Kette oder einen Zahnriemen mit einem Rad einer Kurbelwelle verbunden ist und mit gleicher Drehzahl wie die Kurbelwelle dreht. Die Nockenwellen sind in nicht dargestellten Lagern maschinenfest gelagert und weisen miteinander kämmende Zahnräder 80 und 82 auf, so dass sie mit gleicher Drehzahl gegensinnig drehen. Es sind zwei Frischladungseinlassventile 46 vorgesehen, von denen jedes von einem Frischladungsnocken 56 betätigt wird, der jeweils an einer der Nockenwellen 74 und 76 ausgebildet ist.

In der dargestellten Ausführungsform ist ein Auslassventil 50 vorgesehen, das von einem nicht dargestellten an einer der Nockenwellen 74 oder 76 ausgebildeten Auslassnocken betätigt wird. Es versteht sich, dass das Auslassventil 50 über an beiden Nockenwellen ausgebildete Nocken betätigt werden kann oder zwei Auslassventile vorgesehen sein können.

Das Einlassventil 54 wird von einem an der Nockenwelle 74 ausgebildeten Einlassnocken 60 betätigt, wobei ein Schaft des Einlassventils, wie aus Fig. 1 ersichtlich, unter Abdichtung durch den Überströmkolben 40 hindurch geführt ist. Der Überströmkolben 40, der die Verdichterkammer 34 und die Arbeitskammer 36 überlappt, ist in Aufsicht oval geformt und ist im dargestellten Beispiel einteilig mit vier Schäften ausgebildet, an deren freien Enden Rollen 84 gelagert sind, die an jeweils einem Überströmnocken 62 anliegen, der an jeder der Nockenwellen 74 und 76 ausgebildet ist. Die Rollen 84 werden von Federn 86, die sich zwischen dem Maschinengehäuse und den nicht mit Bezugszeichen versehenen Schäften des Überströmkolbens 40 abstützen, in Anlage an die Überströmnocken 62 gedrängt, d.h. die Federn 86 drängen den Überströmkolben 40 gemäß Fig. 1 nach oben in die Stellung, in der die Überströmkammer 42 maximales Volumen hat. Die Nocken 62 sind derart konturiert, dass der Überströmkolben 40 bei Anlage am Nockengrundkreis gegen die Kraft der Federn nach unten in eine Stellung gedrängt ist, in der das Volumen der Überströmkammer 42 minimal bzw. annähernd Null ist. Die Kontur der Nocken ist einfallend, so dass der Überströmkolben einen Hub entsprechend der doppelpunktierten Linie der Fig. 9 ausführt, wobei der in der Überströmkammer herrschende Druck die Kraft der Federn 86 unterstützt. Mit der beschriebenen Konstruktion wird erreicht, dass im Nockentrieb keine höheren Flächenpressungen auftreten als in konventionellen Nockentrieben.

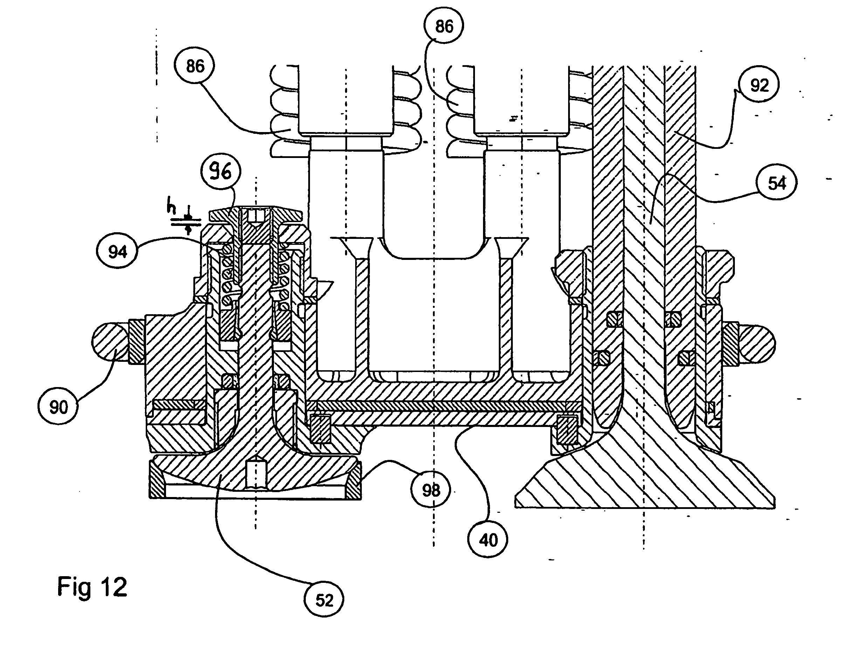

Fig. 12 zeigt einen Querschnitt durch den Überströmkolben 40 mit darin aufgenommenem Einlassventil 54 und Überströmventil 52. Der Überströmkolben 40 ist mittels einer oder mehrerer Dichtungen 90 unter Abdichtung im Zylinderkopf 30 (Fig. 1) auf und abwärts beweglich. Der Schaft des Einlassventils 54 ist unter Abdichtung in einer Hülse 92 geführt, die wiederum unter Abdichtung in dem Überströmkolben 40 geführt ist.

Der Schaft des Überströmventils 52 ist unter Abdichtung verschiebbar innerhalb des Überströmkolbens 40 geführt und wird von einer Feder 94, die sich an ihrem oberen Ende an einem Bund des Überströmkolbens 40 und an ihrem unteren Ende an einem starr mit dem Überströmventil 52 verbundenen Bund abstützt, gemäß Fig. 12 nach unten gedrängt. Am oberen Ende des Schaftes ist eine Hülse 96 befestigt, die einen Bund aufweist, der relativ zum Überströmkolben 40 um ein Maß h beweglich ist, das deutlich kleiner als der maximale Hub des Überströmkolbens 40 ist.

In der dargestellten Stellung nimmt der Überströmkolben 40 die Position ein, in der das Volumen der Überströmkammer 42 minimal ist und der Ventilteller des Überströmventils 52 an einem Ventilsitz 58 anliegt, der in der Stirnwand 32 (Fig. 1) ausgebildet ist.
Wie bereits erläutert, ist die Funktion derart, dass das Überströmventil 52 bei Bewegen des Überströmkolbens 40 aus dessen OT heraus zunächst während eines Hubs h des Überströmkolbens 40 geschlossen bleiben kann und dann zwangsweise'vom Ventilsitz 98 abhebt. Je nach Dimensionierung der Feder 94 kann deren Kraft schon vor Bewegen des Überströmkolbens 40 um den Hub h vom Druck in der Verdichterkammer, 34 überwunden werden, so dass das Überströmventil 52 bereits unmittelbar nach Beginn der Bewegung des Überströmkolbens 40 aus seinem OT öffnet.

Die beispielhaft beschriebene erfindungsgemäße Brennkraftmaschine kann in vielfältiger Weise abgeändert werden:

Das Überströmventil 52 kann als einfaches Rückschlagventil ausgebildet sein, das lediglich vom Druck in der Verdichterkammer 34 gegen die Kraft einer sich am Maschinengehäuse abstützenden Feder geöffnet wird, wobei die Federkraft zweckentsprechend eingestellt ist.

Das Überströmventil 52 kann als eigenes Bauteil entfallen, wenn der Überströmkolben selbst entsprechend ausgebildet ist.

Der Überströmkolben 40 kann sich unmittelbar nach dem Überschieben der Frischladung in die Arbeitskammer 36 und Schließen des Einlassventils 54 unter Volumenzunahme der Überströmkammer 42 in Richtung seines unteren Totpunktes bewegen, so dass der Verdichterkolben 16 unmittelbar nach dem Einsetzen der Aufwärtsbewegung Frischladung in die Überströmkammer 42 fördert.

Zur Anpassung der Öffnungs- und Schließzeitpunkte der jeweiligen Ventile an die Betriebsbedingungen können Phasensteller vorgesehen sein. Weiter ist es möglich, die Ventile nicht unmittelbar durch Drehung der nicht dargestellten Kurbelwelle der Brennkraftmaschine zu betätigen, sondern eigene Ventilaktoren vorzusehen, die zweckentsprechend gesteuert werden. Die effektive Verdichtung und die Zündbedingungen können durch den Schließzeitpunkt des Auslassventils beeinflusst werden; dieser Schließzeitpunkt kann durch eine entsprechende Verstelleinrichtung gegebenenfalls an unterschiedliche Betriebsbedingungen angepasst werden.

Zum Zwecke der Aufheizung eines Katalysators beim Start und im Warmlauf kann es vorteilhaft sein, das Auslassventil 50 mittels eines variablen Ventiltriebs derart zu betätigen, dass es für eine rasche Katalysatoraufheizung früh öffnet. Aus gleichem Grund kann es zweckmäßig sein, das Überströmventil 52 für die Aufheizung des Katalysators derart zu tätigen, dass die Frischladung erst spät in die Arbeitskammer ausgeschoben wird und/oder die Verbrennung erst möglichst spät erfolgt.

Für eine intensive Ladungsbewegung in der Arbeitskammer 36 kann es vorteilhaft sein, das Einlassventil 54 mit einer Maskierung zu versehen.

Anstelle eines Nockentriebes kann insbesondere für den Zwangsantrieb des Überströmkolbens 40 ein hydraulischer, pneumatischer oder elektrischer Antrieb vorgesehen sein.

Die Bewegung des Überströmkolbens kann derart gesteuert sein, dass er sich zu Beginn eines Verdichtungshubs des Verdichterkolbens zumindest annähernd in der Stellung befindet, in der das Volumen der Überströmkammer maximal ist. Das Überströmventil ist dann im Wesentlichen während des gesamten Verdichtungshubs des Verdichtungskolbens offen, so dass das Verdichten der Frischladung und deren Überschieben in die Überströmkammer gleichzeitig oder zumindest weitgehend überlappend erfolgen.

Abhängig von der Zielauslegung des Motors und Kompromissen im Motorkennfeld kann es vorteilhaft sein, den Verdichterzylinder und/oder den Arbeitszylinder mit einem System zur Veränderung der geometrischen Kompression auszurüsten oder die effektive Kompression durch entsprechende Veränderung der Steuerzeiten zu variieren. Ebenso kann es zweckmäßig sein, ein System vorzusehen, mit dem die Phasendifferenz zwischen der Bewegung des Verdichterkolbens und des zugehörigen Arbeitskolbens verändert werden kann.

Wegen der hohen Wechselkräfte, die auf eine Kette oder einen Zahnriemen wirken, der beispielsweise das Nockenwellenrad 78 (Fig. 11) antreibt, ist es vorteilhaft, zwischen der Kurbelwelle und der Nockenwelle eine Zwischenwelle vorzusehen, die gemäß Figur 11 vorteilhafterweise unterhalb der Nockenwellen 74 und 76 angeordnet ist, um eine kleine Bauhöhe des Zylinderkopfes zu erzielen. Die Zwischenwelle weist ein im Durchmesser kleines Antriebsrad auf, so dass sie mit höherer Drehzahl als die Nockenwelle dreht. Über ein Zahnrad auf der Zwischenwelle werden vorteilhafterweise beide Nockenwellen gegensinnig angetrieben, wobei die Zahnräder der Nockenwellen entsprechend größer sind, so dass eine Gesamtübersetzung zwischen Kurbelwelle und den Nockenwellen von 1 erreicht wird. Zum Ausgleich von Massenmomenten erster Ordnung (bei einer 4-Zylinderanordnung mit zwei Verdichterzylinder/Arbeitszylindereinheiten) sind zusätzlich zu,Ausgleichsmassen an der Kurbelwelle vorteilharterweise auch an einer gegenläufig zur Kurbelwelle drehenden Nockenwelle Ausgleichsmassen angeordnet, die sich beispielsweise an beiden Enden der Nockenwelle befinden und um 180° zueinander versetzt sind.

Die geometrischen Dimensionierungen der Kolben und Kolbenhübe werden entsprechend den jeweiligen Anforderungen im Hinblick auf thermodynamische Gesichtspunkte derart bemessen, dass bei geringer Verdichtungs- und Überströmarbeit eine möglichst hohe Füllung der Arbeitskammer 36 erzielt wird und dass, wenn die Brennkraftmaschine ohne fremdzündung betrieben wird, im Bereich des OT des Arbeitskolbens 18 Temperaturen erzielt werden, bei denen direkt eingespritzter Kraftstoff oder direkt eingeleitetes Gas zuverlässig selbst zündet. Bei fremd gezündetem Betrieb mit Ottokraftstoff kann die Verdichtungsendtemperatur entsprechend niedriger liegen.

Die erfindungsgemäße Brennkraftmaschine kann als Saugmotor oder aufgeladen betrieben werden.

Es kann vorteilhaft sein, die Ladungszusammensetzung im Arbeitszylinder durch Verwendung eines zusätzlichen Spülventils (ähnlich wie bei einem Kopf gesteuerten Zweitaktmotor mit Ventilen) zu beeinflussen, d.h. das Ausschieben des Restgases zu unterstützen, wodurch sich bei "Auslass schließt" mehr Frischluft im Arbeitszylinder befindet und das Temperaturniveau abgesenkt wird.

Ein beispielhafter Motor, auf den sich die Diagramme der Figuren 9 und 10, sowie die Darstellungen der Figuren 11 und 12 beziehen, hat folgende Abmessungen:

| | **Verdichterkolben** | **Überströmkolben** | **Arbeitskolben** |
|---|---|---|---|
| **Bohrung (mm)** | 86 | 65* | 115 |
| **Hub (mm)** | 86 | 7 | 120 |
| **OT-Volumen (cm³)** | ~0 | ~0 | 38 |

| | | | |
|---|---|---|---|
| *Der Überströmkolben hat hier eine elliptische Form, um die Anforderung bezüglich Volumenverlauf und Strömungsquerschnittsverlauf optimal zu erfüllen. | | | |

Die Überexpansion dieses Motors liegt bei etwa 2,5, was für Volllastwirkungsgrade optimal ist. Für die Optimierung der Wirkungsgrade im Teillastbereich ist eine geringere Überexpansion von beispielsweise 1,8 vorteilhaft, d.h., der Arbeitskolben wird dann kleiner,

Mit dem erfindungsgemäßen Motor wurden bei Direkteinspritzung sowohl mit Dieselkraftstoff als auch mit Ottokraftstoff effektive Mitteldrucke von über 20 bar erzielt und effektive Wirkungsgrade von über 55%.

Vorteilhafterweise sollte das Verhältnis der Volumina der Arbeitskammer zu der Überströmkammer jeweils im UT des zugehörigen Kolbens zwischen 25 und 60 liegen. Das Verhältnis der Volumina der Verdichterkammer zu der Überströmkammer, jeweils im UT des zugehörigen Kolbens, sollte zwischen 15 und 25 liegen. Das geometrische Verdichtungsverhältnis der Arbeitskammer liegt vorteilhafterweise zwischen 25 und 40. Das Einlassventil, das schließt, wenn der Überströmkolben seinen OT erreicht hat, schließt vorteilhafterweise in einem Bereich zwischen 20 und 5 °KW vor OT des Arbeitskolbens. Die vorgenannten Werte sind nur beispielhaft und nicht einschränkend.

Zur Unterstützung der Kaltstartfähigkeit bei nicht fremdgezündetem Betrieb kann zusätzlich eine Glühkerze installiert werden.

Die Brennkraftmaschine wurde vorstehend mit Direkteinspritzung in den Arbeitszylinder 22 (Einspritzventil 38) geschildert, wobei auch mit weitgehend jedem flüssigen oder gasförmigen Brennstoff ohne Fremdzündung gearbeitet werden kann.

Im Vorstehenden wurde der Zeitpunkt der Direkteinspritzung nicht im Detail erläutert, da der Zeitverlauf der Direkteinspritzung, wie an sich bekannt, gewählt werden kann, wobei die Einspritzung auf vor dem OT des Arbeitskolbens liegende Voreinspritzungen und im Bereich oder nach dem OT liegende Haupteinspritzungen aufgeteilt werden kann. Erfindungsgemäß kann der Kraftstoff in die Arbeitskammer eingespritzt (flüssige Kraftstoffe) oder eingeleitet (gasförmige Kraftstoffe) werden zwischen den Zeitpunkten B und C (Fig. 10), d.h. der Kraftstoff kann der Arbeitskammer zugeführt werden, während sich in der Arbeitskammer nur Restgas befindet. Dieses Restgas wird zusammen mit dem zugeführten Kraftstoff verdichtet, wobei wegen der hohen Temperaturen eine ausgezeichnete Homogenisierung zwischen Kraftstoff und Restgas erfolgt, so dass der Kraftstoff, auch wenn es sich um Dieselkraftstoff handelt, zu dem Zeitpunkt C, zu dem das Einlassventil öffnet, vollständig gasförmig vorliegt und mit der verdichteten Frischluft unter Selbstzündung vollständig verbrennt. Die in der Arbeitskammer vorhandene Restgasmenge wird durch den Schließzeitpunkt B des Auslassventils bestimmt. Der Öffnungszeitpunkt C des Einlassventils und der Schließzeitpunkt D des Einlassventils werden zusammen mit den Volumina der Verdichterkammer, der Überströmkammer und der Arbeitskammer sowie dem Volumen der Arbeitskammer im OT des Arbeitskolbens derart auf die Zündbedingungen abgestimmt, dass die Verbrennung des Luft-Kraftstoff Restgasgemisches im Wesentlichen nach dem OT des Arbeitskolbens erfolgt. Die Zeitdauer zwischen dem Zeitpunkt B (Auslassventil schließt) und dem Zeitpunkt C (Einlassventil öffnet) wird derart gewählt, dass vor dem Einleiten von verdichteter Frischluft die angesprochene Homogenisierung des Kraftstoff-Restgasge-misches in ausreichender Weise erfolgt. Gegenüber der Direkteinspritzung des Kraftstoffes nahe dem OT des Arbeitskolbens hat die erfindungsgemäße Einspritzung bzw. Einleitung des Kraftstoffes in das Restgas nicht nur den Vorteil der ausgezeichneten Kraftstoffhomogenisierung, sondern auch den Vorteil, dass das Einspritzen bei niedrigerem Druckniveau erfolgt, wodurch der Aufwand für die Einspritzausrüstung vermindert ist. Während konventionell Kraftstoff in die Frischluft enthaltende Arbeitskammer eingespritzt wird, wird erfindungsgemäß verdichtete Frischluft der Arbeitskammer zugeführt, in der ein nicht brennfähiges Kraftstoff-Restgasgemisch vorhanden ist.

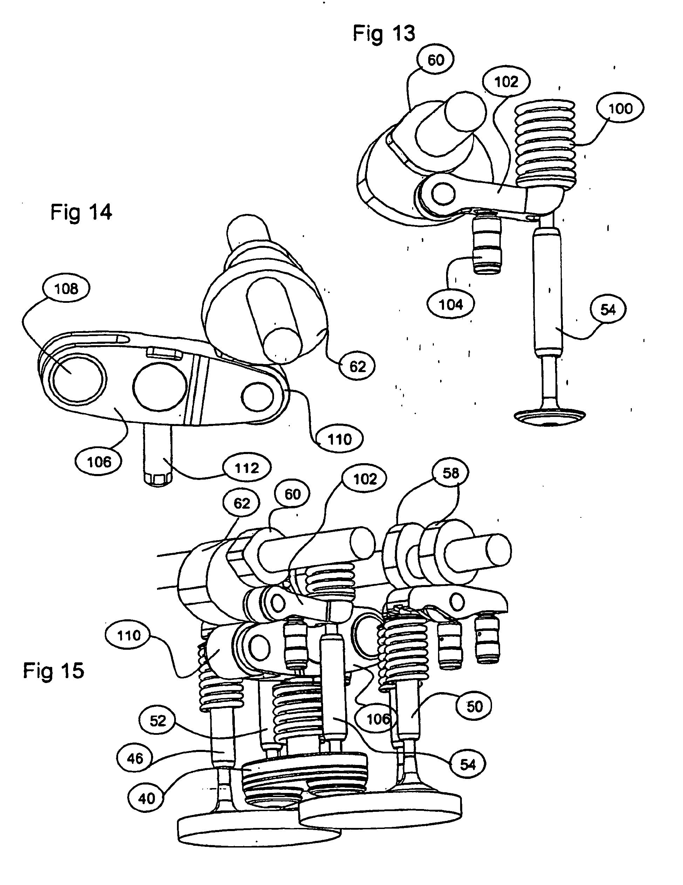

Insbesondere, wenn die Brennkraftmaschine mit externer Gemischbildung außerhalb der Arbeitskammer betrieben wird, wie später erläutert werden wird, muss das Ausschieben der Frischladung aus der Überströmkammer 42 in die Arbeitskammer 36 derart auf die Verbrennung in der Arbeitskammer 36 abgestimmt sein, dass der Druck in der Überströmkammer 42 höher ist als der Druck in der Arbeitskammer 36. Der Druck in der Überströmkammer 42 steigt, wenn die je Arbeitszyklus zugeführte Frischluftmenge (Quantitätssteuerung) mit zunehmender Last ansteigt. Der in der Arbeitskammer 36 beim Öffnen des Einlassventils 54 herrschende Druck ist dagegen nahezu Last-unabhängig. Es ist daher zweckmäßig, das Einlassventil 54 invertiert auszuführen, wie in Figur 13 dargestellt. '

Gemäß Figur 13 wird das Einlassventil 54 von seiner Feder von oben her in Anlage an den in der Innenwand 32 (Fig. 1) des Zylinderkopfes angeordneten Ventilsitz gedrängt, d.h. der Teller des Einlassventils 54 ist mit einer sich nach unten verjüngenden Sitzfläche ausgebildet. Die Öffnung des Einlassventils 54 erfolgt über einen Rollenkipphebel 102, der sich zwischen dem Eingriff des Rollenkipphebels 102 mit der Feder 100 und der Anlage der Rolle des Rollenkipphebels an dem Einlassnocken 60 an einem Motorgehäuse festen Gegenlager 104 abstützt, das vorteilhafterweise als Ventilspielausgleichselement ausgeführt ist. Wie ersichtlich, wird der Rollenkipphebel 102 zur Öffnung des Ventils von dem Einlassnocken 60 in Gegenuhrzeigerrichtung gegen die Kraft der Feder 100 verschwenkt, woraufhin das Einlassventil 54 durch den Druck in der Arbeitskammer geöffnet wird.

Vorteilhafterweise ist der Ventilsitz derart ausgeführt, dass sich an der Wand der Arbeitskammer eine isolierende Restgasschicht ausbildet.

Wie bereits anhand der Figur 11 erläutert, sind zur Betätigung des Überströmkolbens für ein Ausschieben der Frischladung in die Arbeitskammer erhebliche Kräfte erforderlich. Um diese Kräfte aufzubringen, ohne den Ventiltrieb übermäßig zu belasten, ist es vorteilhaft gemäß Figur 14 den Überströmkolben 40 mittels eines oder ggf. mehrerer Rollenschlepphebel 106 zu betätigen. Der Rollenschlepphebel 106 ist bei 108 am Motorgehäuse, ggf. mittels eines Ventilspielausgleichselements, gelagert. An seinem vom Lager 108 abgewandten Ende ist eine Rolle 110 des Rollenschlepphebels in Anlage an dem Überströmnocken 62. Zwischen der Rolle 110 und dem Lager 108 greift am Rollenschlepphebel 106 ein Stößel 112 an, der den Überströmkolben 40 (Fig. 1) betätigt. In Folge der mit dieser Konstruktion erreichten Hebelübersetzung kann der Hub, den der Stößel 112 ausführt, gegenüber dem Hub der Rolle 110 vermindert und die vom Stößel 110 auf den Überströmkolben übertragene Kraft entsprechend vergrößert sein.

Figur 15 zeigt einen Ventiltrieb mit den Konstruktionselementen der Figuren 13 und 14, deren Aufbau anhand der verwendeten Bezugszeichen ersichtlich ist und deshalb nicht im Einzelnen erläutert wird. Die Konstruktionen gemäß Figur 13 und 14 können einzeln oder in Kombination angewendet werden.

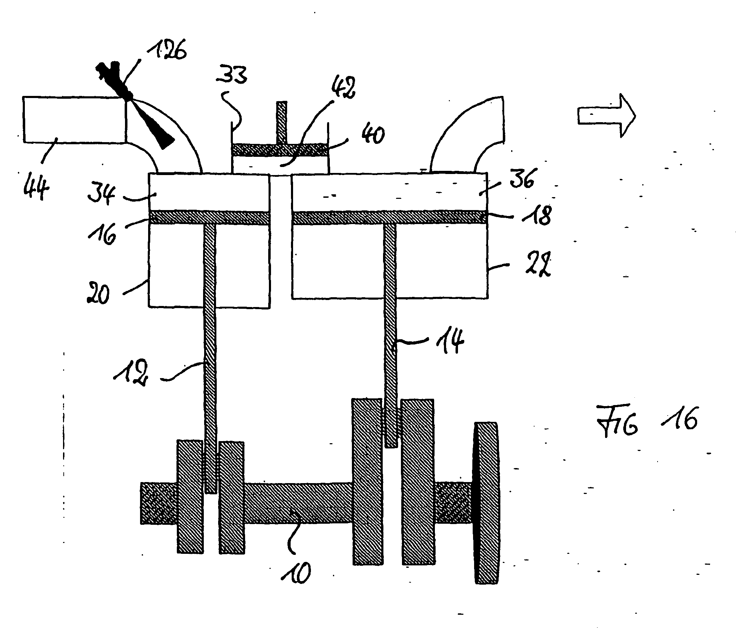

Anhand der Figur 16 wird im Folgenden erläutert, dass die Brennkraftmaschine auch mit externer Gemischbildung, betrieben werden kann.

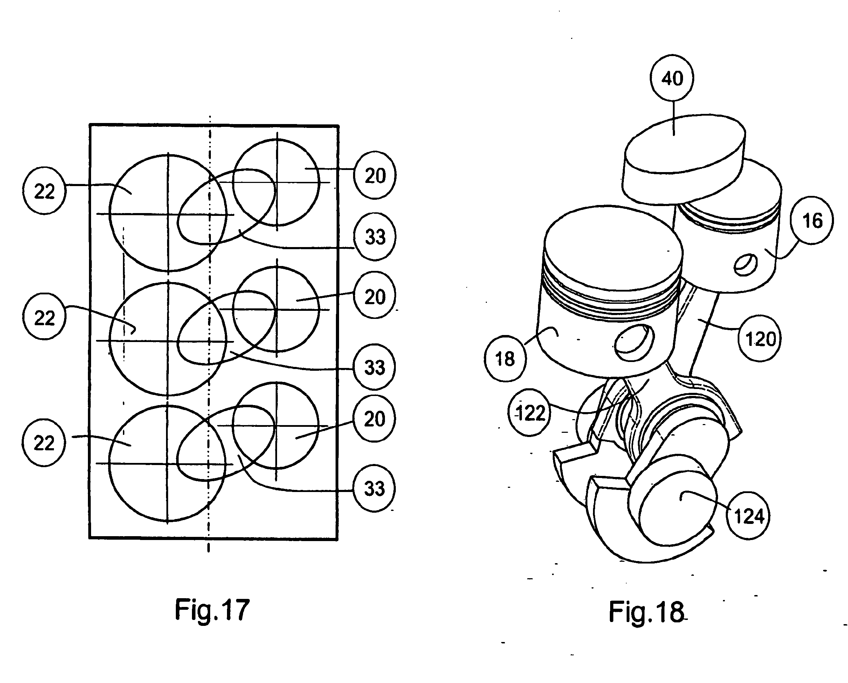

Figur 16 zeigt eine Prinzipansicht einer Einheit aus Verdichterzylinder 20, Überströmzylinder 33 und Arbeitszylinder 22. In dem in den Verdichterzylinder 20 führenden Frischladungseinlasskanal 44 ist ein Einspritzventil 106 angeordnet, die, wie bei herkömmlichen Saugrohreinspritzungen bekannt, flüssigen Kraftstoff oder Brenngas in den Frischladungseinlasskanal 44 einspritzt, der Frischluft durch ein Luftfilter hindurch ansaugt oder an,den Verdichter einer Aufladeeinrichtung angeschlossen ist. Bevorzugt erfolgt, insbesondere wenn eine oder mehrere Einspritzventile 126 bei mehrzylindrigen Brennkraftmaschinen in jedem in einen Verdichterzylinder 20 führenden Frischladungseinlasskanal 44 angeordnet sind, die Einspritzung nicht kontinuierlich, sondern nur während des Zeitraums, währenddessen die Verdichterkammer 34 durch das offene Frischladungseinlassventil 46 (in Fig. 18 nicht dargestellt) mit Frischluft befüllt wird.

Durch das Einspritzventil 126 kann jedwelcher flüssige oder gasförmige Kraftstoff zugeführt werden. Auch schwerflüchtige Dieselkraftstoffe können eingespritzt werden, wobei das entstehende Gemisch während der Verdichtung in der Verdichterkammer 34 und dem anschließenden Überschieben in die Arbeitskammer 36 durch die Überströmkammer 42 hindurch zumindest weitgehend vollständig verdampft und ausgezeichnet aufbereitet und homogenisiert wird. Der in die Arbeitskammer ausgeschobene Teil des Gemisches erreicht durch die in der Arbeitskammer vorherrschenden hohen Wandtemperaturen und durch die Durchmischung mit in der Arbeitskammer vorhandenem heißen Restgas Zündbedingungen. Dadurch entzündet sich weder das Dieselkraftstoff Luftgemisch noch bei Betrieb mit Ottokraftstoff, das Ottokraftstoff-Luftgemisch oder, bei Gasbetrieb, das Gas-Luftgemisch spontan insgesamt, sondern es erfolgt durch den zeitlichen Ablauf des Gemischausschiebens eine verhältnismäßig weiche Verbrennung entsprechend der Fig. 10, deren Druckverlauf sowohl bei extemer Einspritzung als auch bei Einspritzung direkt in die Arbeitskammer ohne Druckspitzen erfolgt, wie sie bei klopfendem Betrieb herkömmlicher Otto-Motoren oder bei herkömmlichen Dieselmotoren auftreten. In Folge dieser weichen Verbrennung können belastete Bauteile schwächer dimensioniert werden und erhöht sich die Lebensdauer des Motors. Ein weiterer Vorteil, der mit dem erfindungsgemäßen Verfahren, insbesondere bei Saugrohreinspritzung von Dieselkraftstoff erzielt wird, ist, dass ein Rußfilter entfallen kann und dass konventionelle Abgasnachbehandlungen mit preiswerten Katalysatoren die Erfüllung schärfster Abgasgesetze ermöglichen. Es kann zweckmäßig sein, für bestimmte Betriebsbedingungen, z. B. Kaltstart oder niedrige Teillast, eine Zündhilfe, wie Zünd- oder Glühkerze, in der Arbeitskammer vorzusehen.

Die Drehmoment- und Leistungscharakteristika, die mit der geschilderten Brennkraftmaschine erzielt werden, sind weitgehend unabhängig davon, ob mit Einspritzung direkt in die Arbeitskammer oder mit externer Einspritzung gearbeitet wird, wobei bei externer Einspritzung ein Systemdruck (Kraftstoffdruck stromoberhalb des Einspritzventils) zwischen 3 und 8 bar durchaus ausreicht.

Das Einspritzventil 126 bzw. die Einspritzventile müssen nicht zwangsläufig stromoberhalb der Verdichterkammer 34 angeordnet sein. Die Einspritzung kann auch direkt in die Verdichterkammer 34 oder in die Überströmkammer 42 erfolgen.

Die durch die Erfindung erzielte erhebliche Wirkungsgradverbesserung ist im Wesentlichen auf wenigstens einen der folgenden Faktoren zurückzuführen:

Ein Teil der Kompression erfolgt außerhalb des Brennraums bzw. der Arbeitskammer, wodurch die Kompression bei niederer Temperatur erfolgt und die Kompressionsarbeit vermindert wird. Ein Teil der Abgasenergie wird jeweils genutzt, indem die weitgehend oder nur wenig erwärmte verdichtete Frischladung dem heißen Brennraum bzw. der heißen Arbeitskammer zugeführt wird und dort thermische Energie aufnimmt. Zur noch besseren Nutzung der Abgaswärme kann das aus dem Auslasskanal 48 strömende Abgas zur Aufheizung der Überströmkammer 42 verwendet werden, indem es beispielsweise an der Rückseite des Überströmkolbens 40 entlang oder durch ihn hindurch geführt wird und/oder die Umfangswand des Überströmzylinders 33 aufheizt. In diesem Fall ist der Überströmkolben nicht zur

Überströmkammer hin thermisch isoliert. Es kann auch mit zwei Überströmzylindern gearbeitet werden, deren Überströmkammern abwechselnd von Abgas und verdichteter Frischladung durchströmt wird. Es versteht sich, dass die Aufheizung der Überströmkammer derart ausgeführt wird, dass die Temperatur der Verdichterkammer dadurch möglichst nicht ansteigt. Bei Aufheizurig der in die Überströmkammer übergeschobenen verdichteten Frischladung wird diese thermisch weiter verdichtet und der Öffnungszeitpunkt des Einlassventils entsprechend angepasst.

Die Wandwärmeverluste sind vermindert, da die gegenüber dem Verdichter thermisch isolierte Arbeitskammer nur wenig gekühlt werden muss oder auf eine externe Kühlung der Arbeitskammer ganz verzichtet werden kann.

Die Prozessführung erfolgt mit verlängerter Expansion.

Weitere Vorteile des erfindungsgemäßen Motors sind sein runder Lauf und seine Vielstofffähigkeit. Der Betrieb kanne mit flüssigen Kraftstoffen, gasförmigen Kraftstoffen und auch staubförmigen Festbrennstoffen erfolgen.

Fig. 17 zeigt eine schematische Aufsicht auf eine dreizylindrige erfindungsgemäße Brennkraftmaschine, wobei die einzelnen beschriebenen Zylindereinheiten aus Verdichterzylinder 20, Überströmzylinder 33 und Arbeitszylinder 22 in einer Reihe hintereinander angeordnet sind. Die Verdichterkolben 16 und Arbeitskolben 18 können über Pleuel 120, 122 (Fig. 18) mit einer gemeinsamen Kurbelwelle 124 verbunden sein, deren Drehachse in Fig. 17 doppelpunktiert angedeutet ist. Das Pleuel 120 des Verdichterkolbens 16 und das Pleuel 122 und der Arbeitskolben 18 jeder der Einheiten können mit einer gemeinsamen Kurbel zusammen wirken, die einen Kurbelzapfen mit zwei in Längsrichtung der Kurbelwelle 124 hintereinander angeordneten und zueinander versetzten Kurbelzapfenabschnitten aufweist, mit denen der erwünschte Phasenversatz zwischen der Bewegung des Arbeitskolbens 18 und des Verdichterkolbens 16 erzielt wird. Der Arbeitskolben 18 und der Verdichterkolben 16 können auch mit jeweils eigenen Kröpfungen bzw. Kurbeln zusammen wirken, um den erwünschten Phasenversatz zwischen Arbeitskolben und Verdichterkolben zu erreichen, der auch Null sein kann.

Für alle Ventile und den Überströmkolben ist ein Nockentrieb, beispielsweise entsprechend Fig. 11 oder 15, vorgesehen, der sich längs der gesamten Brennkraftmaschine erstreckt.

Die erfindungsgemäßen Zylindereinheiten mit Verdichterkolben, Überströmkolben und Arbeitskolben können in jedwelcher Anzahl und Anordnung vorhanden sein, wie sie auch bei herkömmlichen Motoren bekannt sind.

Zur Minimierung des thermischen Verzuges der Maschine kann es insbesondere bei einer Ausführung mit zwei Verdichterylindern und zwei Arbeitszylindern vorteilhaft sein, die Arbeitszylinder an den äußeren Stirnseiten der Maschine, d.h. der, Steuertriebseite und der Schwungradseite anzuordnen, und die Verdichterzylinder dazwischen anzuordnen. Für einen optimalen Momentenausgleich und kurze Leitungswege für ein mögliches Aufladesysteme kann es jedoch vorteilhaft sein, die Verdichterzylinder an den Stirnseiten anzuordnen und die Heißzylinder dazwischen.

Sowohl bei Direkteinspritzung als auch bei Saugrohreinspritzung kann die erfindungsgemäße Brennkraftmaschine mit stöchiometrischem Luft-Kraftstoff-Verhältnis (λ = 1) oder mit rein lastabhängiger Kraftstoffmengeneinspritzung betrieben werden. Im ersteren Fall muss die Luftmenge lastabhängig gesteuert und gemessen werden, damit die eingespritzte Kraftstoffmenge auf den Luftdurchsatz abgestimmt werden kann. Je nach Betriebspunkt der Brennkraftmaschine kann von einer Betriebsweise auf die andere übergegangen werden. Die jeweilige Betriebsweise bestimmt in an sich bekannter Weise die für die Abgasnachbehandlung zur verwendenden Katalysatoren und weitere, für die Abgasnachbehandlung wichtige Parameter, beispielsweise das Ausmaß der Abgasrückführung.

Die erfindungsgemäße Brennkraftmaschine ist vielstofffähig, d.h. sie kann, wie ausgeführt, mit weitgehend allen Arten von flüssigen und gasförmigen Kraftstoffen betrieben werden. Der jeweils verwendete bzw. getankte Kraftstoff kann in an sich bekannter Weise bestimmt werden und die einzelnen Steuerzeiten können durch Einsatz entsprechender Ventilbetätigungssysteme auf den jeweiligen Kraftstoff abgestimmt werden. Insbesondere durch Veränderung des Öffnungszeitpunkts des Auslassventils und Veränderung der Phasenlage der Bewegung des Überströmkolbens relativ zur Kurbelwellendrehung kann die zum Zeitpunkt des OT des Arbeitskolbens erreichte Temperatur in der Arbeitskammer beeinflusst werden.

Zur Verbesserung des Kaltstartverhaltens kann es zweckmäßig sein, bei Saugrohreinspritzung gegenüber dem Einspritzventil ein zeitweilig beheiztes Heizelement anzuordnen, mit dem die Gemischbildung im Kaltzustand unterstützt wird. Weiter kann es zweckmäßig sein, in der Arbeitskammer ein zeitweilig beheiztes Element, beispielsweise eine Glühkerze, anzuordnen.

Insbesondere'bei Betrieb mit Direkteinspritzung ist es möglich, die Brennkraftmaschine mit unterschiedlichen Kraftstoffen bei gleichen Steuerzeiten der Ventile zu betreiben und die Kraftstoffart nur durch Veränderung des Zeitablaufes der Einspritzung zu berücksichtigen, was bei elektronisch ansteuerbaren Einspritzventilen in einfacher Weise möglich ist.

Die geschilderten Verfahren der direkten Einspritzung bzw. Einleitung von Kraftstoff in den Arbeitszylinder derart, dass der Kraftstoff in Frischluft enthaltendes, verdichtetes Gas eingeleitet wird, oder der Kraftstoff in keine Luft bzw. keinen Sauerstoff enthaltendes Restgas eingeleitet wird, oder der Kraftstoff strömungsoberhalb des Arbeitszylinders in unverdichtete oder verdichtete Frischluft eingeleitet wird, können miteinander kombiniert werden, so dass Kraftstoffanteile entsprechend den verschiedenen Verfahren eingeleitet werden. Die Anteile können beispielsweise last- oder temperaturabhängig verändert werden.

Für die beschriebenen Ausführungsformen der erfindungsgemäßen Brennkraftmaschine sind unter Anderem folgende Möglichkeiten der Laststeuerung und Kraftstoffeinbringung möglich:

Unter Umgebungsbedingungen oder geringem Überdruck gasförmiger Kraftstoff oder flüssiger Kraftstoff in Form von Benzin oder Diesel kann in das Saugrohr, beispielsweise über eine Multipoint-Einspritzanlage, eingespritzt werden. Dabei ist eine Lambda 1 Regelung oder Lean Burn Regelung sowohl mittels einer Quantitätssteuerung über eine Drosselklappe im Saugrohr oder über ein hinsichtlich der Steuerzeiten variables Frischladungseinlassventil möglich. Weiter kann flüssiger Kraftstoff direkt in den Verdichterzylinder, gegebenenfalls auch in den Überströmzylinder eingespritzt werden, wobei die Last über eine Drosselklappe oder vorteilhaft über ein Frischladungseinlassventil mit variablen Steuerzeiten gesteuert werden kann und sowohl eine Lambda 1 als auch eine Lean Burn Regelung möglich ist. Die Last kann auch über die Kraftstoffmenge eingestellt werden.

Alternativ kann Benzin- oder Dieselkraftstoff direkt in den heißen Arbeitszylinder eingespritzt werden, wobei die Last vorteilhafterweise über die eingespritzte Kraftstoffmenge geregelt wird.

Bei Kraftstoffeinbringung in das Saugrohr oder die Verdichterkammer erfolgt die Laststeuerung vorteilhafterweise durch Steuerung des Frischluftdurchsatzes mittels variabler Steuerzeiten des Frischladungseinlassventils. Das Volumenverhältnis von Arbeitskammer zu Verdichterkammer kann beispielsweise zwischen 1 und 3 liegen, wobei es bei Einsatz der Brennkraftmaschine im PKW kleiner sein kann als bei Einsatz im LKW und am größten bei einem Stationärmotor ist, der vorwiegend unter Volllast läuft.

Der Restgasgehalt in der Arbeitskammer kann durch variable Steuerzeiten des Auslassventils gesteuert werden, wobei bei vorwiegendem Betrieb unter Volllast die Steuerzeit des Auslassventils auf optimale Werte fest eingestellt werden kann.

Die Phasendifferenz zwischen Arbeitskolben und Verdichterkolben kann beispielsweise zwischen -5° und +10° Kurbelwinkel liegen, wobei vorteilhafterweise der heiße Arbeitskolben dem kalten Verdichterkolben nacheilt.

Das Frischladungseinlassventil öffnet bei der vorgenannten Anwendung vorteilhafterweise nach dem OT des Verdichterkolbens, beispielsweise bis zu 20° nach dem OT des Verdichterkolbens, und schließt vorteilhafterweise nach dem UT des Verdichterkolbens, beispielsweise 20° nach dessen UT.

Das Überströmventil öffnet vorteilhafterweise deutlich vor dem OT des Verdichterkolbens, beispielsweise 90° vor OT, und schließt im Bereich des OT des Verdichterkolbens.

Das Einlassventil, das die Überströmkammer mit der Arbeitskammer verbindet, öffnet vorteilhafterweise vor dem OT des Arbeitskolbens, beispielsweise 10° vor dessen OT. Es schließt vorteilhafterweise nach dem OT des heißen Arbeitskolbens, beispielsweise 35° nach dessen OT, wobei die Verbrennung der in die Arbeitskammer ausgeschobenen Frischladung im Wesentlichen über die Öffnungsdauer des Einlassventils andauert.

Das Auslassventil öffnet vorteilhafterweise deutlich nach dem OT des heißen Arbeitskolbens, beispielsweise 150° nach dessen OT und schließt vorteilhafterweise vor dem OT des Arbeitskolbens, beispielsweise 70° vor dessen OT.

Der Überströmkolben beginnt seine Bewegung vorteilhafterweise deutlich vor dem OT des Verdichterkolbens, beispielsweise 90° vor dessen OT. Der Überströmkolben beendet seine Bewegung vorteilhafterweise nach dem OT des kalten Verdichterkotbens, beispielsweise 30° nach dessen OT.

Die vorstehend angegebenen Werte sind beispielhaft und nicht einschränkend und gelten beispielsweise für den Fall externer Gemischbildung.

### Bezugszeichenliste

- 10: Kurbelwelle
- 12: Pleuel
- 14: Pleuel
- 16: Verdichterkolben
- 18: Arbeitskolben
- 20: Verdichterzylinder
- 22: Arbeitszylinder
- 24: Zylinderrohr
- 28: Zylindergehäuse
- 30: Zylinderkopf
- 32: Stirnwand
- 33: Überströmzylinder
- 34: Verdichterkammer
- 36: Arbeitskammer
- 38: Einspritzventil
- 40: Überströmkolben
- 42: Überströmkammer
- 44: Frischladungseinlasskanal
- 46: Frischladungseinlassventil
- 48: Auslasskanal
- 50: Auslassventil
- 52: Überströmventil
- 53: Feder
- 54: Einlassventil
- 56: Frischladungsnocken
- 58: Auslassnocken
- 60: Einlassnocken
- 62: Überströmnocken
- 70: Stirnwand
- 72: Stirnwand
- 74: Nockenwelle
- 76: Nockenwelle
- 78: Rad
- 80: Zahnrad
- 82: Zahnrad
- 84: Rolle
- 86: Feder 90 Dichtung
- 92: Hülse
- 94: Feder
- 96: Hülse
- 98: Ventilsitz
- 100: Feder
- 102: Rollenkipphebel
- 104: Gegenlager
- 106: Rollenschlepphebel
- 108: Lager
- 110: Rolle
- 112: Stößel
- 120: Pleuel
- 122: Pleuel
- 124: Kurbelwelle
- 126: Einspritzventil

## Patentansprüche

1. Verfahren zum Betreiben einer Brennkraftmaschine mit
wenigstens einem Arbeitszylinder (22) mit einer von einem Arbeitskolben begrenzten Arbeitskammer (36) mit einem Einlassventil (54) und einem Auslassventil (50),
wenigstens einem Verdichterzylinder (20) mit einer von einem Verdichterkolben (16) begrenzten Verdichterkammer (34) mit einem Frischladungseinlassventil (46) und einem Überströmventil (52), und einer Überströmkammer (42), are bei offenem Überströmventil mit der Verdichterkammer (34) verbunden ist und bei offenem Einlassventil (54) mit der Arbeitskammer verbunden ist, enthaltend folgende Schritte:
- Einströmen von Frischladung in die Verdichterkammer (34) unter Volumenzunahme der Verdichterkammer (34),
- Verdichten von in der Verdichterkammer (34) befindlicher Frischladung unter Volumenverminderung der Verdichterkammer (34),
- Überschieben der verdichteten Frischladung in die Überströmkammer (42),
- Ausschieben der in der Überströmkammer (42) befindlichen verdichteten Frischladung in die Arbeitskammer (36),
- Verbrennen der in der Arbeitskammer (36) befindlichen Frischladung unter Volumenvergrößerung der Arbeitskammer (36) und Umwandlung von thermischer Energie in mechanische Arbeitsleistung und
- Ausstoßen der verbrannten Ladung unter Volumenverkleinerung der Arbeitskammer (36),
**dadurch gekennzeichnet, dass**
das Volumen der Überströmkammer (42) während zumindest eines Teils des Überschiebens zunimmt und am Ende des Ausschiebens weniger als 15 %, bevorzugt weniger als 10 %, bevorzugter weniger als 5% und noch bevorzugter weniger als 1 % des maximalen Volumens der Überströmkammer (42) beträgt.

2. Verfahren nach Anspruch 1, wobei das Ausschieben der in der Überströmkammer befind- lichen verdichteten Frischladung beginnt, wenn in der Überströmkammer und der Arbeitskammer annähernd Druckgleichheit herrscht.

3. Verfahren nach Anspruch 1 oder 2, wobei das Auslassventil vor dem OT des Arbeitskolbens schließt.

4. Verfahren nach einem der Ansprüche 1 bis 3, wobei sich das Überschieben der verdichteten Frischladung in die Überströmkammer (42) und das Ausschieben aus der Überströmkammer zeitlich nicht überlappen.

5. Verfahren nach einem der Ansprüche 1 bis 4, wobei die Bewegung des Arbeitskolbens der des Verdichterkolbens nacheilt.

6. Verfahren nach einem der Ansprüche 1 bis 5, wobei der Frischladung stromoberhalb der Überströmkammer Brennstoff zugeführt wird.

7. Verfahren nach einem der Ansprüche 1. bis 6, wobei das Ausschieben der Frischladung in die Arbeitskammer mit dem Verbrennen der bereits in der Arbeitskammer befindlichen Fischladung überlappt.

8. Verfahren nach einem der Ansprüche 1 bis 7, wobei in die Arbeitskammer übergeschobenen Teile der Frischladung durch die Wandtemperaturen der Arbeitskammer und die Durchmischung mit heißem in der Arbeitskammer befindlichem Restgas Selbstzündbedingungen erreichen.

9. Verfahren nach einem der Ansprüche 1 bis 8,
wobei der Arbeitskammer (36) nach dem Ausstoßen der verbrannten Ladung und vor dem Ausschieben der verdichteten Frischladung in die Arbeitskammer Brennstoff zugeführt wird.

10. Verfahren nach einem der Ansprüche 1 bis 9, wobei die aus der Überströmkammer (42) in die Arbeitskammer (36) ausgeschobene verdichtete Frischladung vom Arbeitskolben (18) vor Beginn der Verbrennung weiter verdichtet wird.

11. Verfahren nach einem der Ansprüche 1 bis 10, wobei der Überströmzylinder (33) vom Abgas der Brennkraftmaschine beheizt wird.

12. Verfahren nach einem der Ansprüche 1 bis 11, wobei die geometrische Verdichtung der Frischluft außerhalb des Arbeitszylinders (22) größer ist als eine geometrische Verdichtung, die die Frischluft zwischen ihrer Einleitung in den Arbeitszylinder (22) und vor Erreichen des oberen Totpunktes eines im Arbeitszylinder arbeitenden Kolbens (18) erfährt.

13. Verfahren nach einem der Ansprüche 1 bis 12, wobei der Verdichterzylinder (20) zur Abfuhr wenigstens eines Teils der bei der Verdichtung der Frischluft entstehenden Wärme gekühlt wird.

14. Verfahren nach einem der Ansprüche 1 bis 13, wobei das Verhältnis des je Einströmhubs einströmenden Frischladungsvolumens zum Volumen der Arbeitskammer im OT des Arbeitskolben kleiner ist als das Verhältnis des Volumens der Arbeitskammer bei sich öffnendem Auslassventil zum Volumen der Arbeitskammer im OT des Arbeitskolbens.

15. Brennkraftmaschine mit
wenigstens einem Arbeitszylinder (22) mit einer von einem Arbeitskolben (18) begrenzten Arbeitskammer (36) mit einem Einlassventil (54) und einem Auslassventil (50),
wenigstens einem Verdichterzylinder (20) mit einer von einem Verdichterkolben (16) begrenzten Verdichterkammer (34) mit einem Frischladungseinlassventil (46) und einem Überströmventil (52),
einer Überströmkammer (42), die bei offenem Überströmventil mit der Verdichterkammer verbunden ist und bei offenem Einlassventil mit der Arbeitskammer verbunden ist,
einem mit dem Arbeitskolben und dem Verdichterkolben verbundenen Kurbeltrieb (10) und einer Steuereinrichtung (53, 56, 58, 60, 62) zur Steuerung des Betriebes der Ventile derart, dass
- Frischladung in die Verdichterkammer (34) unter Volumenzunahme der Verdichterkammer einströmt,
- in der Verdichterkammer befindliche Frischladung unter Volumenverminderung der Verdichterkammer verdichtet wird,
- verdichtete Frischladung in die Überströmkammer (42) übergeschoben wird,
- in der Überströmkammer (42) befindliche verdichtete Frischladung in die Arbeitskammer (36) ausgeschoben wird,
- in der Arbeitskammer (36) befindliche Frischladung unter Volumenvergrößerung der Arbeitskammer und Umwandlung von thermischer Energie in mechanische Arbeitsleistung verbrennt und
- verbrannte Ladung unter Volumenverkleinerung der Arbeitskammer ausgestoßen wird,
**dadurch gekennzeichnet, dass**
die Überströmkammer (42) von einem zwischen OT und UT beweglichen Überströmkolben (40) begrenzt wird, wobei das Volumen der Überströmkammer im OT des Überströmkolbens weniger als 15 %, bevorzugt weniger als 10 %, bevorzugter weniger als 5% und noch bevorzugter weniger als 1 % des Volumens der Überströmkammer im UT des Überströmkolbens beträgt und die Bewegung des Überströmkolbens auf die Bewegung des Verdichterkolbens (16) und/oder des Arbeitskolbens (18) abgestimmt erfolgt.

16. Brennkraftmaschine nach Anspruch 15, wobei Bohrung und Hub des Verdichterkolbens (16) kleiner sind als die des Arbeitskolbens (18).

17. Brennkraftmaschine nach Anspruch 15 oder 16, wobei das Volumen der Verdichterkammer (34) im OT des Verdichterkolbens (16) annähernd Null ist.

18. Brennkraftmaschine nach einem der Ansprüche 15 bis 17, wobei der Überströmkolben (40) von einem vom Kurbeltrieb (10) angetriebenen Nockentrieb (74, 76) betätigt wird.

19. Brennkraftmaschine nach Anspruch 18, wobei der Nockentrieb (74, 76) mehrere, den Überströmkolben (40) betätigende Nocken (62) aufweist.

20. Brennkraftmaschine nach einem der Ansprüche 15 bis 19, wobei der Verdichterzylinder (20) und der Arbeitszylinder (22) nebeneinander angeordnet sind und der Überströmkolben (40) in einem Überströmzylinder (33) arbeitet, der in Bewegungsrichtung der Kolben (16, 18) gesehen den Verdichterzylinder und den Arbeitszylinder überlappt und an eine dem Verdichterzylinder und dem Arbeitszylinder gemeinsame Stirnwand (32) angrenzt, in der vom Überströmventil (52) und vom Einlassventil (54) verschließbare Öffnungen ausgebildet sind.

21. Brennkraftmaschine nach Anspruch 20, wobei sich ein Schaft des Einlassventils (54) unter Abdichtung durch den Überströmkolben (40) erstreckt.

22. Brennkraftmaschine nach Anspruch 21, wobei das Einlassventil (54) als ein Tellerventil ausgebildet ist, dessen Teller in der Überströmkammer (42) angeordnet ist und bei einer Bewegung in Richtung auf die Stirnwand (32) schließt.

23. Brennkraftmaschine nach Anspruch 21 oder 22, wobei das Überströmventil (52) als ein Tellerventil ausgebildet ist, das bei Bewegung in Richtung weg von der Verdichterkammer (34) öffnet und dessen Schaft unter Abdichtung in dem Überströmkolben (40) geführt ist.

24. Brennkraftmaschine nach Anspruch 23, wobei das Überströmventil (52) bei im OT befindlichen Überströmkolben (40) geschlossen ist und von der Kraft einer im Überströmkolben angeordneten Feder (53) aus dem Überströmkolben heraus bewegbar ist.

25. Brennkraftmaschine nach einem der Ansprüche 15 bis 24, wobei der Arbeitszylinder (22) und der Verdichterzylinder (20) thermisch voneinander isoliert sind und das Temperaturniveau des Arbeitszylinders höher ist als das des Verdichterzylinders.

26. Brennkraftmaschine nach einem der Ansprüche 15 bis 25, wobei eine Brennstoffzufuhreinrichtung Dieselkraftstoff oder Ottokraftstoff oder gasförmigen Kraftstoff einspritzt.

27. Brennkraftmaschine nach einem der Ansprüche 15 bis 26, wobei eine Brennstoffzufuhreinrichtung ein stromoberhalb des Frischladungseinlassventils (46) angeordnetes Einspritzventil (126) aufweist.

28. Brennkraftmaschine nach einem der Ansprüche 15 bis 27, wobei eine Brennstoffzufuhreinrichtung ein in die Arbeitskammer (36) einspritzendes Einspritzventil (38) aufweist.

29. Brennkraftmaschine nach einem der Ansprüche 15 bis 28, wobei eine Sensoreinrichtung zum Feststellen der Art des Kraftstoffes vorgesehen ist und eine Einrichtung zur Änderung von Phasenlage und Öffnungsdauer der Ventile vorgesehen ist, mit der die Phase und die Öffnungsdauer der Ventile und/oder der Bewegung des Überströmkolbens (40) relativ zur Drehung der Kurbelwelle in Abhängigkeit von dem verwendeten Brennstoff veränderbar ist.

30. Brennkraftmaschine nach einem der Ansprüche 15 bis 29, wobei eine Sensoreinrichtung zur Feststellung des Luft-Kraftstoff-Verhältnisses und eine Sensoreinrichtung zur Feststellung der Drehzahl der Brennkraftmaschine vorgesehen sind, und eine Einrichtung vorgesehen ist, mit der die Phasenlage und die Öffnungsdauer der Ventile und/oder die Bewegung des Überströmkolbens (40) relativ zur Drehung der Kurbelwelle in Abhängigkeit vom Luft-Kraftstoff-Verhältnis und der Drehzahl veränderbar ist.

## Claims

1. Method for operating an internal combustion engine comprising
at least one power cylinder (22) having a power chamber (36) defined by a power piston, the at least one power cylinder having an intake valve (54) and an exhaust valve (50),
at least one compression cylinder (20) having a compression chamber (34), which is defined by a compression piston (16), the compression cylinder having a fresh charge intake valve (46) and a flow-through valve (52), and
a flow-through chamber (42), which is connected with the compression chamber (34) when the flow-through valve is open and which is connected with the power chamber when the intake valve (54) is open, the method comprising the following steps:
- flowing-in fresh charge into the compression chamber (34) while increasing the volume of the compression chamber (34),
- compressing fresh charge located in the compression chamber (34) while decreasing the volume of the compression chamber (34),
- pushing-over the compressed fresh charge into the flow-through chamber (42),
- pushing-out the fresh charge located in the flow-through chamber (42) into the power chamber (36),
- combusting the fresh charge located in the power chamber (36) while increasing the volume of the power chamber (36) and while converting thermal energy into mechanical output power and
- discharging the combusted charge while decreasing the volume of the power chamber (36),
**characterized in that**
the volume of the flow-through chamber (42) increases during at least a part of the pushing-over and, at the end of the pushing-out, the volume is less than 15%, preferably less than 10%, more preferably less than 5% and even more preferably less than 1% of the maximum volume of the flow-through chamber (42).

2. Method according to claim 1, wherein the pushing-out of the compressed fresh charge located in the flow-through chamber starts when an approximate pressure equilibrium exists in the flow-through chamber and the power chamber.

3. Method according to claim 1 or 2, **characterized in that** the exhaust valve closes before the top dead point of the power piston.

4. Method according to one of claims 1 to 3, wherein the pushing-over of the compressed fresh air into the flow-through chamber (42) and the pushing-out from the flow-through chamber do not temporally overlap.

5. Method according to one of claims 1 to 4, wherein the movement of the power piston is retarded relative to the movement of the compression piston.

6. Method according to one of claims 1 to 5, wherein fuel is added to the fresh charge upstream of the flow-through chamber.

7. Method according to one of claims 1 to 6, wherein the pushing-out of the fresh charge into the power chamber overlaps with the combusting of the fresh charge already located in the power chamber.

8. Method according to one of claims 1 to 7, wherein the parts of the fresh charge pushed-over into the power chamber attain self-ignition conditions due to the wall temperatures of the power chamber and the thorough-mixing with hot residual gas located in the power chamber.

9. Method according to one of claims 1 to 8,
wherein fuel is fed into the power chamber (36) after the discharge of the combusted charge and before the pushing-out of the compressed fresh charge into the power chamber.

10. Method according to one of claims 1 to 9, wherein the compressed fresh air, which is pushed-out from the flow-through chamber (42) into the power chamber (36), is further compressed by the power piston (18) before the start of the combustion.

11. Method according to one of claims 1 to 10, wherein the flow-through cylinder (33) is heated by the exhaust gas of the internal combustion engine.

12. Method according to one of claims 1 to 11, wherein the geometrical compression of the fresh air outside of the power cylinder (22) is greater than a geometrical compression, which the fresh air experiences between its introduction to the power cylinder (22) and before reaching the top dead point of a piston (18) operating in the power cylinder.

13. Method according to one of claims 1 to 12, wherein the compression cylinder (20) is cooled for dissipating at least a part of the heat that arises during the compression of the fresh air.

14. Method according to one of claims 1 to 13, wherein the ratio of the fresh charge volume, which flows-in during each flow-in stroke, to the volume of the power chamber in the top dead point of the power piston is less than the ratio of the volume of the power chamber, at the time when the exhaust valve opens, to the volume of the power chamber in the top dead point of the power piston.

15. Internal combustion engine comprising:
at least one power cylinder (22) having a power chamber (36) defined by a power piston (18), the at least one power cylinder (22) having an intake valve (54) and an exhaust valve (50),
at least one compression cylinder (20) having a compression chamber (34), which is defined by a compression piston (16), the at least one compression cylinder (20) having a fresh charge intake valve (46) and a flow-through valve (52),
a flow-through chamber (42), which is connected to the fresh air chamber when the flow-through valve is open and is connected to the power chamber when the intake valve is open,
a crank mechanism (10) connected to the power piston and the compression piston and a control device (53, 56, 58, 60, 62) for controlling the operation of the valves such that
- fresh charge flows into the compression chamber (34) while increasing the volume of the compression chamber,
- fresh charge located in the compression chamber is compressed while decreasing the volume of the compression chamber,
- compressed fresh charge is pushed-over into the flow-through chamber (42),
- compressed fresh charge located in the flow-through chamber (42) is pushed-out into the power chamber (36),
- fresh charge located in the power chamber (36) combusts while increasing the volume of the power chamber and while converting thermal energy into mechanical output power, and
- combusted charge is discharged while decreasing the volume of the power chamber, **characterized in that**
the flow-through chamber (42) is defined by a flow-through piston (40), which is moveable between a top dead point and a bottom dead point, wherein the volume of the flow-through chamber in the top dead point of the flow-through piston is less than 15%, preferably less than 10%, more preferably less than 5% and even more preferably less than 1% of the volume of the flow-through chamber in the bottom dead point of the flow-through piston and the movement of the flow-through piston is tuned to the movement of the compression piston (16) and/or the power piston (18).

16. Internal combustion engine according to claim 15, wherein bore and stroke of the compression piston (16) are less than those of the power piston (18).

17. Internal combustion engine according to claim 15 or 16, wherein the volume of the compression chamber (34) in the top dead point of the compression piston (16) is nearly zero.

18. Internal combustion engine according to one of claims 15 to 17, wherein the flow-through piston (40) is actuated by a cam mechanism (74, 76) that is driven by the crank mechanism (10).

19. Internal combustion engine according to claim 18, wherein the cam mechanism (74, 76) includes a plurality of cams (62) that actuate the flow-through piston (40).

20. Internal combustion engine according to one of claims 15 to 19, wherein the compression cylinder (20) and the power cylinder (22) are located adjacent each other and the flow-through piston (40) operates in a flow-through cylinder (33), which overlaps the compression cylinder and the power cylinder as viewed in the movement direction of the pistons (16, 18) and is defined by an end wall (32), which is common to the compression cylinder and the power cylinder, in which end wall (32) openings are formed that are closable by the flow-through valve (52) and the intake valve (54).

21. Internal combustion engine according to claim 20, wherein a shaft of the intake valve (54) extends through the flow-through piston (40) in a sealed manner.

22. Internal combustion engine according to claim 21, wherein the intake valve (54) is formed as a disk valve, the disk of which is disposed in the flow-through chamber (42) and closes when moved towards the end wall (32).

23. Internal combustion engine according to claim 21 or 22, wherein the flow-through valve (52) is formed as a disk valve, which opens when moved in a direction away from the compression chamber (34) and the shaft of which is guided in the flow-through piston (40) in a sealed manner.

24. Internal combustion engine according to claim 23, wherein the flow-through valve (52) is closed when the flow-through piston (40) is located in the top dead point and is moveable out of the flow-through piston against the force of a spring (53) disposed in the flow-through piston.

25. Internal combustion engine according to one of claims 15 to 24, wherein the power cylinder (22) and the compression cylinder (20) are thermally isolated from each other and the temperature level of the power cylinder is higher than the temperature level of the compression cylinder.

26. Internal combustion engine according to one of claims 15 to 25, wherein a fuel supplying device injects diesel fuel or gasoline or gaseous fuel.

27. Internal combustion engine according to one of claims 15 to 26, wherein a fuel supplying device includes an injection valve (106) disposed upstream of the fresh charge intake valve (46).

28. Internal combustion engine according to one of claims 15 to 27, wherein a fuel supplying device includes a fuel injection valve (38) that injects into the power chamber (36).

29. Internal combustion engine according to one of claims 15 to 28, wherein a sensor device for sensing the type of fuel is provided and a device for changing the phase and the opening duration of the valve is provided, by which the phase and the opening duration of the valves and/or the movement of the flow-through piston (40) relative to the rotation of the crankshaft is changeable in dependence on the fuel that is being utilized.

30. Internal combustion engine according to one of claims 15 to 29, wherein a sensor device for sensing the air-fuel-ratio and a sensor device for sensing the rotational speed of the internal combustion engine are provided, and a device is provided, with which the phase and the opening duration of the valves and/or the movement of the flow-through piston (40) relative to the rotation of the crankshaft is changeable in dependence on the air-fuel-ratio and the rotational speed.

## Revendications

1. Procédé pour faire fonctionner un moteur à combustion interne, comprenant :
au moins un cylindre de travail (22) avec une chambre de travail (36) délimitée par un piston de travail, ayant une soupape d'entrée (54) et une soupape de sortie (50),
au moins un cylindre de compression (20) avec une chambre de compression (34) délimitée par un piston de compression (16), ayant une soupape d'entrée de charge fraîche (46) et une soupape de décharge (52), et une chambre de décharge (42) qui, lorsque la soupape de décharge est ouverte, est raccordée à la chambre de compression (34) et, lorsque la soupape d'entrée (54) est ouverte, est raccordée à la chambre de travail, comportant les étapes suivantes :
- l'entrée d'une charge fraîche dans la chambre de compression (34), ce qui a pour effet d'augmenter le volume de la chambre de compression (34),
- la compression de la charge fraîche se trouvant dans la chambre de compression (34), ce qui a pour effet de diminuer le volume de la chambre de compression (34),
- le transfert de la charge fraîche comprimée dans la chambre de décharge (42),
- le passage de la charge fraîche comprimée se trouvant dans la chambre de décharge (42) dans la chambre de travail (36),
- la combustion de la charge fraîche se trouvant dans la chambre de travail (36), ce qui a pour effet d'augmenter le volume de la chambre de travail (36) et la transformation d'énergie thermique en puissance de travail mécanique, et
- l'expulsion de la charge brûlée, ce qui a pour effet de diminuer le volume de la chambre de travail (36), **caractérisé en ce que** :
le volume de la chambre de décharge (42) augmente pendant au moins une partie du transfert et, à la fin du passage, il est inférieur à 15 %, de préférence inférieur à 10 %, mieux encore inférieur à 5 % et, bien mieux encore, inférieur à 1 % du volume maximal de la chambre de décharge (42).

2. Procédé selon la revendication 1, dans lequel le passage de la charge fraîche comprimée se trouvant dans la chambre de décharge démarre lorsqu'une égalité de pression règne approximativement dans la chambre de décharge et la chambre de travail.

3. Procédé selon la revendication 1 ou 2, dans lequel la soupape de sortie se ferme avant le PMH du piston de travail.

4. Procédé selon l'une quelconque des revendications 1 à 3, dans lequel le transfert de la charge fraîche comprimée dans la chambre de décharge (42) et le passage hors de la chambre de décharge ne se chevauchent pas dans le temps.

5. Procédé selon l'une quelconque des revendications 1 à 4, dans lequel le déplacement du piston de travail est en retard sur celui du piston de compression.

6. Procédé selon l'une quelconque des revendications 1 à 5, dans lequel du carburant est acheminé à la charge fraîche en amont de la chambre de décharge.

7. Procédé selon l'une quelconque des revendications 1 à 6, dans lequel le passage de la charge fraîche dans la chambre de travail chevauche la combustion de la charge fraîche se trouvant déjà dans la chambre de travail.

8. Procédé selon l'une quelconque des revendications 1 à 7, dans lequel des parties de la charge fraîche transférées dans la chambre de travail atteignent des conditions d'auto-allumage en raison des températures des parois de la chambre de travail et du mélange avec du gaz résiduel chaud se trouvant dans la chambre de travail.

9. Procédé selon l'une quelconque des revendications 1 à 8,
dans lequel du carburant est acheminé à la chambre de travail (36) après l'expulsion de la charge brûlée et avant le passage de la charge fraîche comprimée dans la chambre de travail.

10. Procédé selon l'une quelconque des revendications 1 à 9, dans lequel la charge fraîche comprimée expulsée de la chambre de décharge (42) dans la chambre de travail (36) est encore comprimée par le piston de travail (18) avant le démarrage de la combustion.

11. Procédé selon l'une quelconque des revendications 1 à 10, dans lequel le cylindre de décharge (33) est chauffé par les gaz brûlés du moteur à combustion interne.

12. Procédé selon l'une quelconque des revendications 1 à 11, dans lequel la compression géométrique de l'air frais en dehors du cylindre de travail (22) est supérieure à une compression géométrique que subit l'air frais entre son introduction dans le cylindre de travail (22) et avant d'atteindre le point mort haut d'un piston (18) travaillant dans le cylindre de travail.

13. Procédé selon l'une quelconque des revendications 1 à 12, dans lequel le cylindre de compression (20) est refroidi pour dissiper au moins une partie de la chaleur produite lors de la compression de l'air frais.

14. Procédé selon l'une quelconque des revendications 1 à 13, dans lequel le rapport du volume de charge fraîche entrant par course d'entrée au volume de la chambre de travail au PMH du piston de travail est inférieur au rapport du volume de la chambre de travail, lorsque la soupape de sortie est ouverte, au volume de la chambre de travail au PMH du piston de travail.

15. Moteur à combustion interne, comprenant :
au moins un cylindre de travail (22) avec une chambre de travail (36) délimitée par un piston de travail (18), ayant une soupape d'entrée (54) et une soupape de sortie (50),
au moins un cylindre de compression (20) avec une chambre de compression (34) délimitée par un piston de compression (16) ayant une soupape d'entrée de charge fraîche (46) et une soupape de décharge (52),
une chambre de décharge (42) qui est raccordée à la chambre de compression lorsque la soupape de décharge est ouverte et qui est raccordée à la chambre de travail lorsque la soupape d'entrée est ouverte,
une commande à manivelle (10) raccordée au piston de travail et au piston de compression (10) et
un dispositif de commande (53, 56, 58, 60, 62) pourcommander le fonctionnement des soupapes de sorte que
- la charge fraîche entre dans la chambre de compression (34) en augmentant le volume de la chambre de compression,
- la charge fraîche se trouvant dans la chambre de compression soit comprimée en diminuant le volume de la chambre de compression,
- la charge fraîche comprimée soit transférée dans la chambre de décharge (42),
- la charge fraîche comprimée se trouvant dans la chambre de décharge (42) soit envoyée dans la chambre de travail (36),
- la charge fraîche se trouvant dans la chambre de travail (36) soit brûlée en augmentant le volume de la chambre de travail et en transformant l'énergie thermique en puissance de travail mécanique, et
- la charge brûlée soit expulsée en diminuant le volume de la chambre de travail,
**caractérisé en ce que**
la chambre de décharge (42) est délimitée par un piston de décharge (40) mobile entre le PMH et le PMB, dans lequel le volume de la chambre de décharge au PMH du piston de décharge est inférieur à 15 %, de préférence inférieur à 10 %, mieux encore inférieur à 5 % et, bien mieux encore, inférieur à 1 % du volume de la chambre de décharge au PMB du piston de décharge et le déplacement du piston de décharge s'effectue de manière ajustée au déplacement du piston de compression (16) et/ou du piston de travail (18).

16. Moteur à combustion interne selon la revendication 15, dans lequel l'alésage et la course du piston de compression (16) sont inférieurs à ceux du piston de travail (18).

17. Moteur à combustion interne selon la revendication 15 ou 16, dans lequel le volume de la chambre de compression (34) au PMH du piston de compression (16) est approximativement nul.

18. Moteur à combustion interne selon l'une quelconque des revendications 15 à 17, dans lequel le piston de décharge (40) est commandé par une commande à came (74, 76) entraînée par la commande à manivelle (10).

19. Moteur à combustion interne selon la revendication 18, dans lequel la commande à came (74, 76) présente plusieurs cames (62) commandant le piston de décharge (40).

20. Moteur à combustion interne selon l'une quelconque des revendications 15 à 19, dans lequel le cylindre de compression (20) et le cylindre de travail (22) sont agencés l'un à côté de l'autre et le piston de décharge (40) travaille dans un cylindre de décharge (33) qui, observé dans le sens de déplacement des pistons (16, 18), chevauche le cylindre de compression et le cylindre de travail et jouxte une paroi frontale (32) commune au cylindre de compression et au cylindre de travail, dans laquelle paroi sont formées des ouvertures pouvant être fermées par la soupape de décharge (52) et la soupape d'entrée (54).

21. Moteur à combustion interne selon la revendication 20, dans lequel une tige de la soupape d'entrée (54) s'étend de manière étanche à travers le piston de décharge (40).

22. Moteur à combustion interne selon la revendication 21, dans lequel la soupape d'entrée (54) est conformée en soupape à disque, dont le disque est agencé dans la chambre de décharge (42) et se ferme lors d'un déplacement en direction de la paroi frontale (32).

23. Moteur à combustion interne selon la revendication 21 ou 22, dans lequel la soupape de décharge (52) est conformée en soupape à disque, qui s'ouvre lors d'un déplacement en direction opposée à la chambre de compression (34) et dont la tige est guidée de manière étanche dans le piston de décharge (40).

24. Moteur à combustion interne selon la revendication 23, dans lequel la soupape de décharge (52) est fermée lorsque le piston de décharge (40) se trouve au PMH et peut être déplacée hors du piston de décharge par la force d'un ressort (53) agencé dans le piston de décharge.

25. Moteur à combustion interne selon l'une quelconque des revendications 15 à 24, dans lequel le cylindre de travail (22) et le cylindre de compression (20) sont isolés thermiquement l'un de l'autre et le niveau de température du cylindre de travail est supérieur à celui du cylindre de compression.

26. Moteur à combustion interne selon l'une quelconque des revendications 15 à 25, dans lequel un dispositif d'alimentation en carburant injecte du carburant diesel ou de l'essence pour moteurs ou du carburant gazeux.

27. Moteur à combustion interne selon l'une quelconque des revendications 15 à 26, dans lequel un dispositif d'alimentation en carburant présente une soupape d'injection (126) agencée en amont de la soupape d'entrée de charge fraîche (46).

28. Moteur à combustion interne selon l'une quelconque des revendications 15 à 27, dans lequel un dispositif d'alimentation en carburant présente une soupape d'injection (38) injectant dans la chambre de travail (36).

29. Moteur à combustion interne selon l'une quelconque des revendications 15 à 28, dans lequel on prévoit un dispositif capteur pour déterminer le type de carburant et un dispositif pour modifier la position de phase et la durée d'ouverture des soupapes, à l'aide duquel dispositif la phase et la durée d'ouverture des soupapes et/ou le déplacement du piston de décharge (40) par rapport à la rotation du vilebrequin peuvent être modifiés en fonction du carburant utilisé.

30. Moteur à combustion interne selon l'une quelconque des revendications 15 à 29, dans lequel on prévoit un dispositif capteur pour déterminer le rapport air-carburant et un dispositif capteur pour déterminer la vitesse de rotation du moteur à combustion interne et on prévoit un dispositif, à l'aide duquel la position de phase et la durée d'ouverture des soupapes et/ou le déplacement du piston de décharge (40) par rapport à la rotation du vilebrequin peuvent être modifiés en fonction du rapport air-carburant et de la vitesse de rotation.
